# EUROPÄISCHE PATENTANMELDUNG

(11) **EP 4 378 864 A1**
(43) Veröffentlichungstag der Anmeldung: **05.06.2024**
(21) Anmeldenummer: 22210505.8
(22) Anmeldetag: 30.11.2022
(51) Int. Cl.: B65G 59/10

(54) **VERFAHREN UND VORRICHTUNG ZUM VEREINZELN EINES GEFÄSSES SOWIE SYSTEM ZUM BEFÜLLEN VON GEFÄSSEN**

(71) Anmelder: DAW SE, 64372 Ober-Ramstadt (DE)
(72) Erfinder: KISLING, Ralf, 4343 Mitterkirschen (AT); PRINZ, Alexander, 4363 Pabneukirchen (AT); KÄFERBÖCK, Alexander, 3684 St Oswald (AT)
(74) Vertreter: Metten, Karl-Heinz

(57) **Zusammenfassung**

Eine Vorrichtung (1) zum Vereinzeln eines Gefäßes (20) aus einem Stoß (200), insbesondere Stapel, umfassend mehrere in einer Stoß- bzw. Stapelrichtung (S) ineinander steckende Gefäße (20, 220), insbesondere Henkeleimer, die einen Boden (21, 221), einem insbesondere kragenförmigen Radialvorsprung (25, 225) und einem sich vom Radialvorsprung (25, 225) zum Boden (20, 220) verjüngenden Gefäßabschnitt (23, 223) aufweisen, umfasst eine Greifeinheit (11) zum Erfassen des Gefäßabschnitts (23, 223) eines ersten Gefäßes (20), und eine Halteeinheit (31) zum Fixieren eines zweiten Gefäßes (220), das in dem ersten Gefäß (20) steckt, insbesondere am Radialvorsprung (225) des zweiten Gefäßes (220), wobei die Halteinheit (31) und die Greifeinheit (11) zum Vereinzeln des ersten Gefäßes (20) relativ zu einander in der Stoß- bzw. Stapelrichtung (S) beweglich sind.

## Beschreibung

Die Erfindung betrifft ein Verfahren und eine Vorrichtung zum Vereinzeln eines Gefäßes aus einem Stoß umfassend mehrere in einer Stoßrichtung ineinander steckende Gefäße. Die Gefäße haben einen Boden, einen insbesondere kragenförmigen Radialvorsprung und einen sich vom Radialvorsprung zum Boden verjüngenden Gefäßabschnitt. Insbesondere sind die den Stoß bildenden Gefäße als gestapelte Henkeleimer realisiert. Die Erfindung betrifft auch ein System zum Befüllen von Gefäßen, insbesondere Henkeleimern, mit einer flüssigen, pastösen, riesel- oder schüttfähigen Masse, vorzugsweise einem Baustoff, wie eine Farbe.

Beim Entstapeln von Eimern von Hand durch Abziehen des untersten Eimers von dem Stapel bleibt oftmals der Henkel des vorletzten Eimers an der Kante des untersten Eimers hängen. FR 2 661 164 A1 schlägt daher eine Vorrichtung vor, bei der gestapelte Eimer mithilfe von Schienen geführt werden und eine Schieber sukzessive die Henkel der gestapelten Eimer anhebt, während der unterste Eimer aus dem Stapel mittels eines Saugnapfes abgezogen wird.

Aus CN 105 347 048 A ist ein automatische vertikaler Eimerteilmaschine bekannt. In der Maschine wird ein Stapel in einander steckender Eimer zunächst innerhalb eines Gestells angehoben bis zu einer Klaue, die den Stapel ergreift. Dann wird zum Anheben eines Henkels wird ein Hebeblock betätigt und anschließend ein Vakuum-Sauger in Kontakt mit dem Boden des untersten Eimers gebracht. Mit dem Vakuum-Sauger wird der Eimer vom Stapel getrennt.

Herkömmliche Verfahren zum Vereinzeln von Gefäßen aus einem Stoß gleichartiger in einander steckender Gefäße haben geringe Taktzahlen. Bei manchen Produktionslinien wird durch diese Taktzahl die gesamte Produkt-Abgabemenge bestimmt. Für höhere Produktionsmengen müssten zusätzliche Vereinzelungsvorrichtungen in die Produktionslinie integriert werden, um von zwei oder mehr Vereinzelungsvorrichtungen ausgehend Gefäße an die nachfolgenden Produktionsstationen bereitzustellen. Es besteht der Wunsch, die damit einhergehenden erhöhten Unkosten und den gesteigerten Raumbedarf zu vermeiden. Ferner werden bei der Verwendung von Saugnäpfen zum Abziehen von Gefäßen häufig deren Böden beschädigt oder sogar abgerissen. Falls beschädigte Gefäße befüllt werden, entstehen Verunreinigungen an der Produktionslinie. Bei einer Beschädigung eines Gefäßes muss üblicherweise die Produktionslinie angehalten und der Fehler behoben werden, was Standzeiten und damit einhergehende Produktionsverluste zur Folge hat.

Es ist eine Aufgabe der Erfindung, die Nachteile des Stands der Technik zu überwinden und insbesondere ein Verfahren und eine Vorrichtung zum Vereinzeln von Gefäßen aus einem Stoß bereitzustellen, welches mit großer Zuverlässigkeit eine hohe Entnahmerate gewährleistet. Diese Aufgabe wird gelöst durch den Gegenstand der unabhängigen Ansprüche.

Demnach ist eine Vorrichtung zum Vereinzeln eines Gefäßes aus einem Stoß umfassend mehrere in einer Stoßrichtung ineinander steckende Gefäße vorgesehen. Jedes Gefäß weist einen Boden, einen insbesondere kragenförmigen Radialvorsprung und einen sich vom Radialvorsprung zum Boden verjüngenden Gefäßabschnitt auf.

Die erfindungsgemäße Vorrichtung zum Vereinzeln eines Gefäßes, oder kurz: Vereinzelungsvorrichtung, umfasst eine Greifeinheit und eine Halteeinheit. Die Greifeinheit dient zum Erfassen des Gefäßabschnitts eines ersten Gefäßes. Die Greifeinheit ist vorzugsweise zum Erfassen des Gefäßabschnitts ausgelegt und eingerichtet. Die Halteeinheit dient zum Fixieren eines zweiten Gefäßes, dass in dem ersten Gefäß steckt. Insbesondere ist die Halteeinheit zum Fixieren des zweiten Gefäßes, insbesondere am Radialvorsprung des zweiten Gefäßes, ausgelegt und eingerichtet. Bei der erfindungsgemäßen Vereinzelungsvorrichtung sind die Halteeinheit und die Greifeinheit zum Vereinzeln des ersten Gefäßes relativ zueinander in der Stoßrichtung beweglich. Vorzugsweise weist die Vorrichtung ein insbesondere ortsfestes Gestell auf, an dem die Greifeinheit und die Halteeinheit befestigt sind. Die Greifeinheit und/oder die Halteeinheit ist bzw. sind relativ zu dem Gestell beweglich an dem Gestell befestigt. Es ist denkbar, dass sowohl die als auch die Halteeinheit beweglich an dem Gestell befestigt sind. Vorzugsweise ist die Greifeinheit in der Stoßrichtung beweglich an dem Gestell befestigt. Besonders bevorzugt ist die Halteeinheit in der Stoßrichtung unbeweglich an dem Gestell befestigt. Die Greifeinheit und/oder die Halteeinheit können an dem Gestell, vorzugsweise beide, quer zur Stoßrichtung beweglich befestigt sein.

Überaschenderweise hat sich herausgestellt, dass sich eine Entstapelung von Gefäßen, insbesondere Eimern, vorzugsweise Henkeleimern, besonders rasch, verlässlich und beschädigungsarm umsetzen lässt, in dem eine Greifeinheit verwendet wird, welche das Gefäß seitlich, im Bereich von dessen Gefäßabschnitt, ergreift. Anders als gemeinhin angenommen ist es demgegenüber nachteilig, mit einem Saugnapf oder dergleichen am Boden des Gefäßes anzugreifen, um das Gefäß von einem Stoß abzuziehen. Mit dem erfindungsgemäßen Verfahren und der erfindungsgemäßen Vorrichtung können Gefäßes aus einem Stoß mit einer sehr viel höheren Taktrate entnommen werden, als bislang für möglich gehalten wurde. Gleichzeitig kann dank der erfindungsgemäßen Vorrichtung und dem erfindungsgemäßen Verfahren beim Vereinzeln von Gefäßen aus einem Stoß eine sehr viel geringere Fehlerrate erreicht werden als mit herkömmlichen Vereinzelungsanlagen.

Das Gefäß, insbesondere der Eimer, vorzugsweise der Henkeleimer, hat vorzugsweise ein Fassungsvermögen zwischen 1 L und 50 L, insbesondere zwischen 2 L und 25 L, vorzugweise zwischen 5 L und 15 L. Der Boden und der Gefäßabschnitt des Gefäßes sind vorzugsweise flüssigkeitsdicht und/oder luftdicht. Das Gefäß, d. h. der Boden und der Gefäßabschnitt, sind vorzugsweise ausgelegt und eingerichtet zur Befüllung mit einer flüssigen, pastösen, riesel- oder schüttfähigen Masse, beispielsweise einem Baustoff, wie einer Farbe. Das Gefäß ist vorzugsweise aus einem Kunststoffmaterial, insbesondere einem Thermoplast, wie HDPE, gebildet. Es kann zweckmäßig sein, dass das Gefäß eine Öffnung, insbesondere genau eine Öffnung, aufweist. Es sei klar, dass die Öffnung eines aus dem Stoß vereinzelten Gefäßes durch einen Deckel oder dergleichen, insbesondere luft- und/oder flüssigkeitsdicht, verschließbar sein kann.

Das Gefäß weist vorzugsweise einen Boden auf, der das Gefäß in Stoßrichtung gegenüberliegend zu einer Öffnung des Gefäßes verschließt. Vorzugsweise bildet der Boden ein erstes (unteres) Ende des Gefäßes. Der Boden kann eine geschlossene Grundfläche des Gefäßes definieren, die beispielsweise rund, insbesondere kreisförmig oder oval, oder polygonal, vorzugsweise viereckig mit abgerundeten Ecken, sein kann. Vorzugsweise haben der Boden und die Öffnung die gleiche Form, wobei vorzugsweise die Öffnung eine größere Querschnittsfläche hat als der Boden. Bevorzugt ist der Boden im Wesentlichen flach, es sind jedoch auch andere, zumindest abschnittsweise oder vollständig, konvexe und/oder konkave Bodenformen denkbar.

Die Begriffe "oben" und "unten" werden im Zusammenhang der vorliegenden Offenbarung im Allgemeinen in Bezug auf die in dem Stoß ineinandersteckenden Gefäße, insbesondere das erste Gefäß, verwendet. Die Richtungsangabe "unten" bezieht sich dabei im Allgemeinen auf eine bodenseitige des ersten Gefäßes. Statt mit "unten" könnte diese Richtung als "erste Richtung" bezeichnet sein. Die Richtungsangabe "oben" bezieht sich dabei im Allgemeinen auf eine öffnungsseitige Richtung des ersten Gefäßes. Statt mit "oben" könnte diese Richtung als "zweite Richtung" bezeichnet werden. In den beiliegenden Abbildungen bevorzugter Ausführungen der Erfindung ist ein Stoß und die darin enthaltenen Gefäße im Allgemeinen mit einer vertikalen Stoßrichtung dargestellt, bei der das erste Gefäß wie auch die anderen Gefäß mit ihrem Boden in der Vertikalrichtung abwärts orientiert sind und mit ihrer Öffnung in Vertikalrichtung aufwärts. Es ist jedoch auch denkbar, dass der Stoß eine andere als die abgebildete Orientierung aufweist, wobei auch bei einer anderen Orientierung des Gefäßes oder Stoßes im Sinne der vorliegenden Offenbarung mit "oben" die Richtung bezüglich der Öffnung des Gefäßes und mit "unten" die Richtung entsprechend der Ausrichtung des Bodens des Gefäßes zu verstehen ist.

Zwischen dem Boden und dem Radialvorsprung erstreckt sich der geschlossene Gefäßabschnitt, der auch als Kübelabschnitt bezeichnet sein kann. Der Gefäßabschnitt verjüngt sich. Im Bereich des Gefäßabschnitts ist das Gefäß vorzugsweise im Wesentlichen zylinderhülsenförmig mit einer Neigung. Die Neigung kann konstant oder kontinuierlich sein. Es ist denkbar, dass das Gefäß sich in dem Gefäßabschnitt zusätzlich stufenartig verjüngt. Die Verjüngung des Gefäßes in dem Gefäßabschnitt kann beispielsweise für ein im Spritzgussverfahren hergestellt Gefäß als Entformungsschräge vorgesehen sein und/oder um die Gefäße stapelbar bzw. stoßartig in einander einsteckbar zu gestalten. Es sei klar, dass das Gefäß zusätzlich oder alternativ in dem Gefäßabschnitt eine gekrümmte Kontur aufweisen kann in Bezug auf die Stoßrichtung, also beispielsweise Stoßrichtung abwärts gerundet sein. In Bezug auf die Stoßrichtung kann das Gefäß dem Gefäßabschnitt (sowie vorzugsweise im Bereich des Bodens) symmetrisch geformt sein, insbesondere spiegelsymmetrisch und/oder rotationssymmetrisch. Vorzugsweise kann der Gefäßabschnitt eine, insbesondere kontinuierliche, kegelstumpfförmige Gestalt, vorzugsweise mit konstanter Neigung, haben. Vorzugsweise bildet der Gefäßabschnitt eine bezüglich der Stoßrichtung vollumfängliche, geschlossene Wand, die sich von dem Boden bis zum Radialvorsprung, insbesondere dem Radialvorsprung und der Öffnung, erstreckt.

Vorzugsweise ist der wenigstens eine Radialvorsprung zum Boden gegenüberliegenden oberen Ende des Gefäßes angeordnet. Das Gefäß kann einen oder mehrere Radialvorsprünge haben. Ein Radialvorsprung dehnt sich im Allgemeinen ausgehend von einem insbesondere oberen Ende des Gefäßabschnitts quer zur Stoßrichtung aus. Besonders bevorzugt umfasst das Gefäß nicht mehr als einen Radialvorsprung an dessen dem Boden gegenüberliegenden Ende. Es kann bevorzugt sein, dass der Radialvorsprung eine Öffnung des Gefäßes umringt. Vorzugsweise umfasst das Gefäß einen vollumfänglich umlaufenden kragenförmigen oder flanschförmigen Radialvorsprung. Der Radialvorsprung kann in Relation zu dem Gefäßabschnitt abgewinkelt sein und/oder eine Krümmung, insbesondere einen Radius, bilden. Es kann bevorzugt sein, dass an dem Gefäß, insbesondere an dem Radialvorsprung, ein Henkel schwenkbar befestigt ist.

Die mehreren Gefäße sind vorzugsweise durch Eimer, besonders bevorzugt Henkeleimer, realisiert. Die mehreren Gefäße haben vorzugsweise die gleiche Gestalt. Anders gesagt kann es vorgesehen sein, dass die ineinander steckenden, den Stoß bildenden Gefäße formgleich sind. Der Boden des zweiten Gefäßes befindet sich in dem Stoß in Stoßrichtung oberhalb des Bodens des ersten Gefäßes. Der Stoß umfasst wenigstens ein erstes Gefäß und ein zweites Gefäß, das in dem ersten Gefäß steckt. Vorzugswese umfasst der Stoß ein drittes Gefäß, das in dem zweiten Gefäß steckt. Der Radialvorsprung des zweiten Gefäßes befindet sich in der Stoßrichtung oberhalb des Radialvorsprungs des ersten Gefäßes. Der Boden des zweiten Gefäßes befindet sich innerhalb des Gefäßabschnitts des ersten Gefäßes. Der Bodenabschnitt des zweiten Gefäßes in dem Stoß ist quer zur Stoßrichtung vom Gefäßabschnitt des ersten Gefäßes vollumfänglich umgeben. Das zweite Gefäß ist durch die Öffnung des ersten Gefäßes in dieses eingesetzt. Die mehreren Gefäße können insbesondere die gleichen geometrischen Abmessungen haben und mit Ausnahme herstellungsbedingter Toleranzen identisch geformt sein. Die Vereinzelungsvorrichtung kann dazu ausgelegt sein, Gefäße aus einem Stoß zu Vereinzeln, der (vor Beginn des Vereinzelns) zwischen 5 und 50, insbesondere zwischen 10 und 30, Gefäße umfasst. Beispielsweise kann ein Stoß (vor Beginn eines Vereinzelungsverfahrens) aus 20-25 vorzugsweise gleichförmigen Gefäßen gebildet sein. Vorzugsweise ist die Vereinzelungsvorrichtung dazu ausgelegt, einen Stoß mit einer Stoßhöhe zu Vereinzeln, die (vor Beginn des Vereinzelungsverfahrens) wenigstens 1,5 mal so groß ist wie die Gefäßhöhe eines einzelnen Gefäßes, insbesondere die wenigstens doppelt so groß wie ein einzelnes Gefäß, und/oder nicht die mehr als zehn mal so hoch wie ein einzelnes Gefäß, insbesondere nicht mehr als fünf mal so groß oder nicht mehr als dreimal so groß, wie ein einzelnes Gefäß. Der Stoß hat vorzugsweise eine Stoßhöhe, insbesondere eine Stapelhöhe, zwischen 0,5 m und 2 m, vorzugsweise zwischen 1 m und 1,5 m.

Gemäß einer bevorzugten Ausführung der Vereinzelungsvorrichtung ist die Greifeinheit auf die Gefäße abgestimmt und weist einen passiven Zustand zum Freigeben der Gefäße sowie einen aktiven Zustand auf. Die Greifeinheit ist dazu ausgelegt und eingerichtet, das erste Gefäß in dem aktiven Zustand, vorzugsweise umfangsabschnittsweise, mit einem radialen Anpressdruck zu beaufschlagen. Insbesondere kann die Greifeinheit das erste Gefäß quer, vorzugsweise senkrecht, zu der Stoßrichtung mit dem Anpressdruck beaufschlagen. Vorzugsweise ist die Greifeinheit formabgestimmt auf die insbesondere einheitlichen Gefäße. Beispielsweise kann eine Greifeinheit eine korrespondierend zu einer Umfangskrümmung der Gefäße gekrümmte Kontaktflächen aufweisen. Zweckmäßigerweise kann die Greifeinheit in ihrer Größe auf die Größe der Gefäße abgestimmt sein. Insbesondere ist die Greifeinheit derart auf die Gefäße abgestimmt, dass in dem passiven Zustand eine Beweglichkeit der Gefäße in der Stoßrichtung und/oder quer zur Stoßrichtung, insbesondere in einer vorzugsweise horizontalen Transportrichtung (vorwärts und/oder rückwärts) gestattet ist. Die Greifeinheit kann in dem passiven Zustand in einer Querrichtung (oder längsseitig) quer zur Stoßrichtung und/oder quer zu einer vorzugsweise horizontalen Transportrichtung mindestens so weit geöffnet sein, wie die größte Querbreite (oder Längsbreite) des Gefäßabschnitts, des Radialvorsprungs und/oder gegebenenfalls des Henkels.

Gemäß einer Weiterbildung der Vereinzelungsvorrichtung ist die Greifeinheit dazu ausgelegt und eingerichtet, des erste Gefäß in dem aktiven Zustand durch den Anpressdruck, insbesondere elastisch und/oder reversibel, zu deformieren. Vorzugsweise ist die Greifeinheit dazu ausgelegt und eingerichtet, das erste Gefäß unter Ausbildung eines Spalts zwischen dem ersten Gefäß und dem zweiten Gefäß zum Belüften eines Zwischenraums zu deformieren, der durch das erste Gefäß und das zweite Gefäß gebildet ist. Der Zwischenraum im unverformten Zustand begrenzt durch das erste Gefäß und das in dem ersten Gefäß steckendes zweite Gefäß. Im Wesentlichen erstreckt sich der Zwischenraum zwischen dem Boden des ersten Gefäßes und dem Boden des zweiten Gefäßes. In Radialrichtung ist der Zwischenraum durch die Innenseite des Gefäßabschnitts des ersten Gefäßes sowie gegebenenfalls die Außenseite des Gefäßabschnitts des zweiten Gefäßes begrenzt. Bei Gefäßen, die in einem Spritzgussvorgang hergestellt wurden und mittelbar darauffolgend zu einem Stoß ineinander gesteckt worden sind, erfolgt während der Abkühlung ein Schrumpfen der Gefäße gemäß deren thermischen Ausdehnungskoeffizienten. Beim Abkühlen sinkt außerdem die Temperatur der Luft in dem Zwischenraum und dadurch, wenn dieser Zwischenraum geschlossen ist, auch der dortige Druck, sodass sich ein Vakuum einstellt. Zum vereinzeln des ersten Gefäßes von dem Stoß sind die aus dem Schrumpfen und/oder dem Abkühlen resultierenden Klemmen- und Druck-Kräfte zu überwinden. Der Anpressdruck wird durch die Greifeinheit in dem aktiven Zustand insbesondere umfangsabschnittsweise, beispielsweise durch Backen, die einander in Querrichtung gegenüberliegend, aufgebracht. Vorzugsweise wird das erste Gefäß in der Querrichtung mit dem Anpressdruck beaufschlagt, jedoch nicht in der Längsrichtung. Das formstabile Gefäß, beispielsweise der Eimer, insbesondere Henkeleimer, ist, insbesondere elastisch und/oder reversibel, verformbar. Durch Einwirkung der Greifeinheit wird der das erste Gefäß in der Querrichtung elastisch komprimiert, wobei eine elastische Ausdehnung des ersten Gefäßes in der Längsrichtung erfolgt. Durch das Deformieren des Gefäßes mittels der Greifeinheit können die zwischen dem ersten und dem zweiten Gefäß wirkenden Klemmkräfte reduziert werden. Wenn die infolge des Anpressdruck auftretende Deformation des Gefäßes eine Ausdehnung des ersten Gefäßes quer zur Wirkrichtung des Anpressdruck zur Folge hat, die eine zumindest umfangsabschnittsweise Ablösung der Innenseite des ersten Gefäßes von der Außenseite des darin steckenden zweiten Gefäßes bewirkt, welche sich von der Oberkante des ersten Gefäßes bis zu dem Zwischenraum zwischen dem ersten Gefäß in dem zweiten Gefäß erstreckt, ist ein Spalt ausgebildet, durch den Umgebungsluft in den Zwischenraum gelangen kann, um einen etwaigen dort vorherrschenden Unterdruck auszugleichen. Vorzugsweise ist das Gefäß dergestalt reversibel verformbar, dass insbesondere unter Einwirkung des Anpressdrucks auftretende Verformungen des Gefäß nach Wegnahme des Anpressdruck vollständig verschwinden. D. h., bei einem reversibel deformierbaren Gefäß hat dieses vor dem Vereinzeln dieselbe Formgestalt wie nach dem Vereinzeln. Bei einem elastisch deformierbaren Gefäß wirken elastische Rückstellkräfte entgegen dem deformierenden Anpressdruck, welche nach Wegnahme des Anpressdrucks in Richtung der ursprünglichen Formgestalt des elastischen Gefäß wirken. Ein elastisches Gefäß hat vor dem Vereinzeln im Wesentlichen dieselbe Formgestalt wie nach dem Vereinzeln. Als ein elastisches Gefäß kommt insbesondere ein Kunststoffeimer in Betracht, vorzugsweise ein handelsüblicher Kunststoffeimer, der beispielsweise zum Aufnehmen von Lebensmitteln oder Baustoffen verwendet werden kann. Das Gefäß kann vorzugsweise ein Kunststoffmaterial, wie HOPE, umfassen oder daraus bestehen und eine Wandstärke im Bereich des Gefäßabschnitts und/oder des Bodens im Bereich zwischen 0,3 mm und 3 mm, insbesondere im Bereich 0,5 mm bis 2 mm, vorzugsweise im Bereich von 0,75 mm bis 1,5 mm besonders bevorzugt etwa 1 mm, aufweisen.

Bei einer anderen Weiterbildung der Vereinzelungsvorrichtung, die mit der vorigen kombinierbar ist, umfasst die Greifeinheit wenigstens zwei quer zur Stoßrichtung gegenüberliegende Backen zum Erfassen des ersten Gefäßes, insbesondere an einem Umfangssegment des ersten Gefäßes. Vorzugsweise sind die Backen quer zur Stoßrichtung diametral gegenüberliegend angeordnet. Die Greifeinheit umfasst vorzugsweise genau zwei mit dem ersten Gefäß in Kontakt zu bringenden Backen. Die Backen können die gleiche oder unterschiedliche Formen aufweisen. Vorzugsweise haben die Backen eine im Wesentlichen rechteckige Kontaktflächen zum Inkontaktbringen mit der Außenseite des Gefäßbereichs des ersten Gefäßes, insbesondere dessen Gefäßabschnitt. Die mit dem Gefäß in Kontakt zu entlang eines Umfangssegments Kontakt zu bringende Kontaktfläche der Backe kann sich quer zur Stoßrichtung sowie gegebenenfalls quer zur Querrichtung, insbesondere in der Längsrichtung, über eine Backenweite erstrecken, die kleiner ist als die Längsbreite und/oder Querbreite des Gefäßes, insbesondere kleiner als drei Viertel oder kleiner als zwei Drittel. Die Längsweite der Backe erstreckt sich vorzugsweise über wenigstens 1/20, insbesondere wenigstens ein Zehntel, vorzugsweise wenigstens ein sechstel, besonders bevorzugt wenigstens 1/8 der Längsbreite oder Querbreite des Gefäßes. Die Backe kann eine Backenhöhe haben, die sich über einen Teil des Gefäßabschnitts erstreckt. Die Backenhöhe ist vorzugweise kleiner als die Höhe des Gefäßabschnitts, vorzugsweise kleiner als drei Viertel, insbesondere kleiner als zwei Drittel, besonders bevorzugt < 1/2. der Höhe des Gefäßbereichs. Zusätzlich oder alternativ ist die Höhe der Backe wenigstens 1/20, insbesondere wenigstens ein Zehntel, vorzugsweise wenigstens ein sechstel, besonders bevorzugt wenigstens ein Viertel die Kontaktfläche. Der Backe ist an die umfängliche Krümmung des Gefäßabschnitts vorzugsweise formabgestimmt. Die Krümmung des Gefäßabschnitts in Umfangsrichtung entspricht vorzugsweise im Wesentlichen der Krümmung der Kontaktfläche der Backe.

Gemäß einer bevorzugten Weiterbildung der Greifeinheit mit Backen ist die Greifeinheit derart auf die Gefäße abgestimmt, dass die Backen, insbesondere im aktiven Zustand, einen Mindestabstand größer als eine Querbreite (oder Längsbreite, falls die Backen in der Längsrichtung auf die Gefäße einwirken) des Bodens. Wenn sichergestellt ist, dass die Backen in dem aktiven Zustand, in dem sie den Anpressdruck auf das erste Gefäß ausüben, einen Mindestabstand relativ zueinander einhalten, welcher größer ist als der Boden des zweiten Gefäßes, sichergestellt, dass beim Abziehen des ersten Gefäßes von dem zweiten Gefäß eine Kollision der Greifeinheit, insbesondere der Backen, dem Boden des zweiten Gefäßes unterbleibt. Anderenfalls bestünde ein Risiko, den Boden des zweiten Gefäßes durch die Greifeinheit beim Vereinzeln des ersten Gefäßes abzureißen.

Bei einer anderen Weiterbildung der Greifeinheit mit Backen, die mit den vorigen kombinierbar ist, umfasst wenigstens eine der Backen wenigstens eine Aussparung zum Aufnehmen eines Henkels des ersten Gefäßes oder des zweiten Gefäßes. Vorzugsweise weist wenigstens eine Backe eine Aussparung zum Aufnehmen des Henkels des ersten Gefäßes auf. Zusätzlich oder alternativ kann insbesondere dieselbe wenigstens eine Backe eine zweite Aussparung zum Aufnehmen des Henkels des zweiten Gefäßes aufweisen. Die erste Aussparung für den Henkel des ersten Gefäßes kann insbesondere in dem Kontaktbereich der Backe ausgebildet sein. Durch eine im Kontaktbereich der Backe gebildete erste Aussparung kann ein besonders an das Gefäß formangepasste Greifeinheit realisiert sein, die verhindert, dass der Henkel beim Anpressen der Greifeinheit an das erste Gefäß gegen den Gefäßabschnitt gepresst wird, wodurch anderenfalls eine Beschädigung des Gefäßes erfolgen könnte. Optional kann die wenigstens eine Backe eine zweite Aussparung aufweisen, die insbesondere an einer sich quer zur Kontaktfläche erstreckenden Oberseite der Backe ausgebildet ist. In der zweiten Aussparung kann ein Henkel des zweiten Gefäßes aufgenommen werden. Dadurch kann die Größe der Backe in der Stoßrichtung groß Gewählt werden, wobei das Risiko reduziert wird, dass durch Anpressen der Backen gegen den Stoß die Griffe die Henkel des ersten Gefäßes, des zweiten Gefäßes oder anderer Gefäße in den Gefäßabschnitt des ersten Gefäßes hineingedrückt werden. Die erste und/oder zweite Aussparung ist vorzugsweise formabgestimmt auf die Henkel der Gefäße.

Gemäß einer anderen Weiterbildung einer Greifeinheit insbesondere mit Backen, ist die Greifeinheit dazu ausgelegt und eingerichtet, das erste Gefäß in einem Abstand, insbesondere von wenigstens 2 cm, vorzugsweise wenigstens 4 cm auf, von dessen Boden zu erfassen. Alternativ oder zusätzlich umfasst der Gefäßabschnitt des ersten Gefäßes ein vorsprungsnahes (oberes) Drittel, ein mittleres Drittel und ein bodennahes (unteres) Drittel oder besteht der, wobei die Greifeinheit dazu ausgelegt ist, das erste Gefäß am bodennahen Drittel zu ergreifen. Optional kann sich die Greifeinheit beim Ergreifen des Gefäßes zusätzlich in das mittlere Drittel hinein erstrecken. Beim Ergreifen des ersten Gefäßes durch die Greifeinheit, also im aktiven Zustand der Greifeinheit, ist das vorsprungsnahe Drittel des Gefäßabschnitts vorzugsweise frei von einem Kontakt mit der Greifeinheit. Es kann bevorzugt sein, dass auch das mittlere Drittel frei von einem Kontakt mit Greifeinheit verbleibt. Es kann bevorzugt sein, dass der Gefäßabschnitt eine vorsprungsnahe (obere) Hälfte und eine bodennahe (untere) Hälfte aufweist, insbesondere dar aus besteht. Die Greifeinheit dazu ausgelegt ist, das erste Gefäß vorzugsweise ausschließlich in dem bodennahen Hälfte zu ergreifen. Vorzugsweise ist das Material der Backen, insbesondere zumindest an der Kontaktfläche man die mit es Abschnitt in Berührkontakt zu bringen ist, auf das Material des Gefäßes, insbesondere des Gefäßabschnitts, abgestimmt. Das Material der und das Material des Gefäßes sind vorzugsweise derart aufeinander abgestimmt, dass ein Haftreibungskoeffizient von nicht weniger als 0,3, insbesondere nicht weniger als 0,5, vorzugsweise nicht weniger als 0,7, besonders bevorzugt nicht weniger als 0,8, zwischen dem Gefäß und der Greifeinheit bereitgestellt wird. Die Haftreibung kann vorzugsweise mit der Thrust-Washer (Ring-Scheibe) Methode gemäß Uelz, H.; Wiedemeyer, J.: Tribologie der Polymere, Carl Hanser Verlag, München, Wien, 1985, bestimmt sein.

Bei einer bevorzugten Ausführung einer Vorrichtung zum Vereinzeln von Gefäßen aus einem Stoß ist die Greifeinheit, insbesondere in dem aktiven Zustand, in der Stoßrichtung zwischen einer Übernahmestellung nahe der Halteeinheit und einer Abstreifstellung entfernt von der Halteeinheit beweglich, vorzugsweise translatorisch, insbesondere parallel zur Stoßrichtung, beweglich. Dabei kann insbesondere die Halteeinheit in Bezug auf die Stoßrichtung ortsfest sein. Vorzugsweise ist die Halteeinheit an einem Gestell der Vereinzelungsvorrichtung in Bezug auf die Stoßrichtung ortsfest gehalten. Alternativ oder zusätzlich kann es bevorzugt sein, dass die Vereinzelungsvorrichtung den Stoß mit in Vertikalrichtung ausgerichteter Stoßrichtung trägt. Ein Stoß mit vertikaler Stoßrichtung kann als Stapel bezeichnet sein. Dabei kann das erste Gefäß vorzugsweise zu unterst, also am unteren Ende des Stoßes oder Stapels, angeordnet sein. Wenn das erste Gefäß am unteren Ende eines Stapels von diesem mithilfe der erfindungsgemäßen Vorrichtung vereinzelt wird, kann zusätzlich zu der Kinematik der Vereinzelungsvorrichtung vorteilhafterweise die Schwerkraft zur Vereinzelung genutzt werden.

Bei einer bevorzugten Ausführung der Vorrichtung zum Vereinzeln von Gefäßen aus einem Stoß, die mit den vorigen kombinierbar ist, umfasst die Halteeinheit eine zum Radialvorsprung formkorrespondierende Stützvorrichtung auf und/oder die Halteeinheit umfasst eine Stützvorrichtung, die formkorrespondierend zu einem an den Radialvorsprung angrenzenden Bereich des Gefäßabschnitts ausgeführt ist. Die Stützvorrichtung kann eine Stützweite aufweisen, die sich über nicht weniger als 1/20, insbesondere nicht weniger als ein Zehntel, vorzugsweise nicht weniger als ein sechstel, und/oder nicht mehr als die gesamte, nicht mehr als drei Viertel, insbesondere nicht mehr als die Hälfte, vorzugsweise nicht mehr als ein Viertel, der Längsbreite und/oder der Querbreite des Gefäß erstreckt. Falls die Vereinzelungsvorrichtung eine Greifeinheit mit Backen aufweist, kann es bevorzugt sein, dass die Stützvorrichtung in der Querrichtung und/oder in der Längsrichtung kleiner ist als die Backen. Die Stützvorrichtung und die Backen können vorzugsweise in der selben Wirkrichtung quer zur Stoßrichtung, insbesondere in Querrichtung oder in Längsrichtung, auf die Gefäße einwirken. Auf diese Weise können Torsionskräfte beim Vereinzeln des ersten Gefäß von dem Stoß vermieden werden. In Bezug auf die Stoßrichtung kann die Stützvorrichtung in einer Haltestellung in eine formschlüssige Eingriffspaarung mit dem Radialvorsprung des zweiten Gefäßes bringbar sein. Durch die Stützvorrichtung wird verhindert, dass das zweite Gefäß oder weitere Gefäße des Stoßes sich beim Abziehen des ersten Gefäßes in der Stoßrichtung mit bewegen. Die Stützvorrichtung kontaktiert das zweite Gefäß vorzugsweise in der Stoßrichtung oberhalb des oberen Endes des ersten Gefäßes. Das erste Gefäß kann durch die Greifeinheit von dem Stoß vereinzelten werden, während die Stützvorrichtung der Halteeinheit das zweite Gefäß und den übrigen Stoß ortsfest hält.

Gemäß einer bevorzugten Weiterbildung umfasst die Stützvorrichtung wenigstens zwei in der Radialrichtung gegenüberliegende Haltenasen zum Inkontaktbringen mit dem zweiten Gefäß. Vorzugsweise liegen die Haltenasen einander in der Querrichtung gegenüber. Wenigstens eine der Haltenasen ist quer zu der Stoßrichtung, insbesondere in der Radialrichtung, vorzugsweise in der Querrichtung, zwischen einer Freigabestellung und einer Haltestellung, vorzugweise translatorisch, beweglich. In der Freigabestellung sind die Gefäße bzw. ist der Stoß Gefäße, vorzugsweise in der Stoßrichtung, zwischen den einander gegenüberliegende Haltenasen ungehindert durch die Haltenasen beweglich. Beispielsweise kann in der Freigabestellung der Haltenasen der Stoß durch die Greifeinheit getragen und in der Stoßrichtung, beispielsweise auf und ab, bewegt werden. Beispielsweise kann im Anschluss an das Vereinzeln des ersten Gefäßes die Greifeinheit und die Halteeinheit derart auf einander abgestimmt sein, dass die Greifeinheit das nunmehr zu unterst angeordnete zweite Gefäß ergreift und die Halteeinheit, insbesondere deren Haltenasen, in die Freigabestellung zurückgezogen werden, sodass der Stoß mittels der Greifeinheit in Stoßrichtung abwärts bewegt werden kann und die Haltenasen mit dem Radialvorsprung des nächsten Gefäßes in Kontakteingriff gebracht werden können.

Eine bevorzugte Ausführung einer Vorrichtung zum Vereinzeln von Gefäßen umfasst ferner eine Justiervorrichtung, die dazu ausgelegt und eingerichtet ist, einen Stoß aus Gefäßen mit einem jeweiligen Henkel in einer vorbestimmten Henkellage an die Greifeinheit und/oder die Halteeinheit bereitzustellen.

Bevorzugt umfasst die Vereinzelungsvorrichtung einen Manipulator, wie einen insbesondere sichelförmigen Schwenkarm, zum Entfernen, insbesondere Wegschwenken und/oder Anheben, des Henkel des zweiten Gefäßes sowie gegebenenfalls der Henkel weiterer Gefäße in Relation zu dem ersten Gefäß. Der Manipulator ist vorzugsweise in der Stoßrichtung im Bereich der Haltereinrichtung und/oder oberhalb der Haltereinrichtung angeordnet. Es kann bevorzugt sein, dass der Manipulator an einem Gestell befestigt ist, wobei vorzugsweise die Halteeinheit und/oder die Greifeinheit an demselben Gestell befestigt sind. Der Manipulator ist derart auf die den Stoß bildenden Gefäße abgestimmt, dass der Manipulator vorzugsweise berührungsfrei in Bezug auf den Henkel des ersten Gefäßes, insbesondere relativ zu dem Gestell der Vorrichtung, beweglich ist. Beispielsweise kann der Manipulator einen in Radialrichtung, insbesondere in Längsrichtung, in Richtung des Stoßes hervorstehenden Henkelmitnehmer aufweisen. Zusätzlich kann der Manipulator einen sich in der Stoßrichtung, insbesondere in der Vertikalrichtung, ausdehnenden Hebelarm umfassen, wobei vorzugsweise der Henkelmitnehmer starr an dem Hebelarm befestigt ist. Vorzugsweise ist der Henkelmitnehmer dazu ausgelegt und eingerichtet, eine Bewegung quer zur Stoßrichtung, insbesondere parallel versetzt zu einer Radialrichtung und/oder in Umfangsrichtung, zu absolvieren, um den Henkel des zweiten Gefäßes sowie gegebenenfalls weitere Hebel mitzunehmen. Der Henkelmitnehmer kann beispielsweise dazu ausgelegt und eingerichtet sein, eine Bewegung quer, insbesondere senkrecht, zur Stoßrichtung auf Höhe des oberen Endes des ersten Gefäßes des Stoßes zu vollführen, um den Henkel des zweiten Gefäßes im Bereich des Henkelgelenks am zweiten Gefäß von dem ersten Gefäß weg zu drängen. Der Mitnehmer kann beispielsweise dazu ausgelegt und eingerichtet sein, den Henkel des zweiten Gefäßes in Querrichtung und/oder in Stoßrichtung nach oben von dem ersten Gefäß zu entfernen, sodass der Griffbereich des Henkels in einen Radialabstand relativ zum Radialvorsprung des ersten Gefäßes verbracht ist. Der Manipulator, insbesondere Henkelmitnehmer, ist vorzugsweise dazu ausgelegt und eingerichtet, den Henkel eines zweiten Gefäßes sowie gegebenenfalls weitere Henkel zusätzlicher Gefäße aus dem Bereich der Stoßrichtung, insbesondere der Vertikalrichtung, des Radialvorsprungs des ersten Gefäßes hinaus zu drängen. Durch den Manipulator wird eine Kollision des ersten Gefäßes, insbesondere dessen Radialvorsprung, mit dem Henkel des zweiten Gefäßes sowie gegebenenfalls den Henkel weiterer Gefäße beim Abziehen des ersten Gefäßes von dem Stoß Gefäße vermieden. Anderenfalls bestünde das Risiko, dass beim Vereinzeln des ersten Gefäßes der Henkel eines anderen Gefäßes mitgerissen werden könnte.

Gemäß einer bevorzugten Ausführung einer Vorrichtung zum Vereinzeln von Gefäßen, die mit den vorigen kombinierbar ist, umfasst die Vorrichtung ferner einen Abstreifsensor zum Erkennen eines von dem Stoß vereinzelten ersten Gefäßes. Der Abstreifsensor kann beispielsweise durch eine Lichtschranke oder mehrere Lichtschranken realisiert sein. Vorzugsweise kann wenigstens ein Abstreifsensor unmittelbar angrenzend, insbesondere Förderstromabwärts, relativ zu der Greifeinheit angeordnet sein. Alternativ oder zusätzlich kann ein Abstreifsensor in der Vorrichtung im Bereich der Greifeinheit und/oder der Halteeinheit angeordnet sein, beispielsweise in Stoßrichtung unter der Greifeinheit.

Zusätzlich oder alternativ kann die Vorrichtung mit einer Etikettieranlage ausgestattet sein, die dazu ausgelegt und eingerichtet ist, von dem Stoß vereinzelte Gefäße und/oder erste Gefäße vor deren Vereinzelung von dem Stoß, mit einer Etikettierung zu versehen, beispielsweise ein Haftetikett aufzubringen. Die Etikettieranlage kann dazu ausgelegt und eingerichtet sein, ein Etikett am Boden und/oder am Gefäßabschnitt anzubringen. Es sei klar, dass die Etikettieranlage alternativ oder zusätzlich andere An- oder Aufbringungsmethoden umsetzen kann. Beispielsweise ist es denkbar, dass eine Etikettieranlage eine Oberfläche des Gefäßes bedruckt, mit einer Prägung versieht, oder dergleichen. Die Vorrichtung kann mit mehreren insbesondere unterschiedlichen Etikettieranlage ausgestattet sein. Vorzugsweise kann wenigstens eine Etikettieranlage unmittelbar angrenzend, insbesondere Förderstromabwärts, relativ zu der Greifeinheit angeordnet sein. Alternativ oder zusätzlich kann eine Etikettieranlage in der Vorrichtung im Bereich der Greifeinheit und/oder der Halteeinheit angeordnet sein, beispielsweise in Stoßrichtung zwischen der Greifeinheit und der Halteeinheit, oder in Stoßrichtung unter der Halteeinheit.

Die Erfindung betrifft auch ein System zum Befüllen von Gefäßen mit einer flüssigen, pastösen, riesel- oder schüttfähigen Masse, vorzugsweise einem Baustoff, wie eine Farbe. Das System ist vorzugsweise ausgelegt und eingerichtet zum Befüllen von Gefäßen, insbesondere Henkeleimern, die einen Boden, einen insbesondere kragenförmigen Radialvorsprung und einen sich vom Radialvorsprung zum Boden verjüngenden Gefäßabschnitt aufweisen. Das System umfasst eine Vorrichtung zum Vereinzeln eines Gefäßes (Vereinzelungsvorrichtung) wie oben beschrieben. Ferner umfasst das System eine Abgabevorrichtung zum Befüllen des Gefäßes mit einem vorbestimmten Füllvolumen der Masse. Vorzugsweise umfasst das System mit einer Vereinzelungsvorrichtung, in der ein Stoß aus mehreren Gefäßen angeordnet ist. Zusätzlich oder alternativ umfasst das System vorzugsweise eine Abgabevorrichtung mit wenigstens einem oder genau einem darin angeordneten, vereinzelten Gefäß.

Ein System umfasst gemäß einer bevorzugten Ausführung wenigstens eine Horizontalförderung, insbesondere einen Rollentisch, ein Förderband oder dergleichen, zum Transportieren wenigstens eines Stoßes zu der Vereinzelungsvorrichtung und/oder zum Transportieren wenigstens eines Gefäßes von der Vereinzelungsvorrichtung zu der Abfüllstation.

Bei einer bevorzugten Weiterbildung eines Systems mit Horizontalförderung ist die Vereinzelungsvorrichtung, insbesondere die Greifeinheit, vorzugsweise deren Backen, insbesondere in dem aktiven Zustand, in der Stoßrichtung zwischen einer Annahmestellung zum Erfassen eines von der Horizontalförderung getragenen ersten Gefäßes zu der Übernahmestellung, insbesondere zum Anheben des Stoßes, vorzugsweise zum Abheben des Stoßes von der Horizontalförderung, besonders bevorzugt translatorisch, beweglich. Es kann bevorzugt sein, dass ein, insbesondere aus dem Magazin, über die Horizontalförderung zu der Vereinzelungsvorrichtung geführter Stoß Gefäße, durch die Vereinzelungsvorrichtung, insbesondere die Greifeinheit, anhebar ist. Es kann bevorzugt sein, dass sich die Horizontalförderung für die Gefäße durch die Vereinzelungsvorrichtung in einer Transportrichtung, vorzugsweise Längsrichtung, und/oder quer zur Stoßrichtung hindurch erstreckt. Die Greifeinheit und/oder die Halteeinheit, sowie gegebenenfalls die Justiervorrichtung und/oder der Manipulator, sind vorzugsweise (in Stoßrichtung) vertikal oberhalb der Horizontalförderung angeordnet.

Bei einer optionalen zusätzlichen Weiterbildung des Systems, ist die Greifeinheit dazu ausgelegt und eingerichtet, in der Annahmestellung von dem passiven Zustand in den aktiven Zustand zu wechseln, um den Stoß zu ergreifen. Alternativ oder zusätzlich kann gemäß einer anderen Weiterbildung des Systems die Greifeinheit dazu ausgelegt sein, in der Abstreifstellung von dem aktiven Zustand in den passiven Zustand zu wechseln, um das vereinzelte erste Gefäß an die Horizontalförderung zu übergeben.

Gemäß einer bevorzugten Ausführung des Systems umfasst dieses ferner wenigstens eine Waage zum Erfassen eines Tara-Gewichts eines vereinzelten Gefäßes und/oder wenigstens eine Waage zum Erfassen eines Füllgewichts eines mit der Masse befüllten Gefäßes. Die wenigstens eine Waage ist vorzugsweise im Bereich der Abfüllstation angeordnet. Vorzugsweise umfasst das System ferner eine Kontrolleinrichtung. Die Kontrolleinrichtung kann kommunikationsgemäß mit der Waage gekoppelt sein. Die Kontrolleinrichtung kann kommunikationsgemäß mit der Abgabevorrichtung gekoppelt sein, insbesondere um die Abgabevorrichtung abhängig von einem Gewichts-Messwert der Waage zu betätigen. Zusätzlich oder alternativ kann die Kontrolleinrichtung mit wenigstens einem Fördermittel, wie einem Förderband, einer Weiche oder dergleichen gekoppelt sein, insbesondere um das Fördern von vereinzelten, leeren Gefäßen zu der Abfüllstation, und/oder befüllten Gefäßen aus der Abgabestation zu steuern. Insbesondere kann die Kontrolleinrichtung mit einer Horizontalförderung kommunikationsgemäß verbunden sein, die ein Fördermittel oder mehrere Fördermittel umfasst. Insbesondere kann die Kontrolleinrichtung dazu ausgelegt und eingerichtet sein, wenigstens ein Fördermittel zu betätigen, um wenigstens ein inkorrekt befülltes Gefäß auszusondern.

Zusätzlich oder alternativ umfasst eine Ausführung des Systems wenigstens ein Magazin für wenigstens einen Stoß aus mehreren Gefäßen, insbesondere mit einer Stoßhöhe, vorzugsweise einer Stapelhöhe, wischen 0,5 m und 2 m, vorzugsweise zwischen 1 m und 1,5 m. Bevorzugt umfasst das System wenigstens ein Magazin für mehrere Stöße aus jeweils mehreren Gefäßen. Vorzugsweise umfasst das System ein Magazin für wenigstens einen Stoß aus Gefäßen, wobei die Gefäße realisiert sind durch Eimer, insbesondere Kunststoffeimer, mit einem Fassungsvermögen zwischen jeweils 1 L und 50 L, insbesondere zwischen 2 L und 25 L, vorzugsweise zwischen 5 L und 15 L. Das System kann insbesondere ein Magazin mit wenigstens einem darin angeordneten Stoß aus mehreren Gefäßen umfassen. Es kann bevorzugt sein, dass die Horizontalförderung dazu ausgelegt ist, den Stoß oder die Stöße, insbesondere mit in Vertikalrichtung ausgerichteter Stoßrichtung, von dem Magazin zu der Vereinzelungsvorrichtung zu transportieren. Vorzugsweise ist die Justiereinrichtung derart auf die Horizontalförderung abgestimmt, dass die Justiereinrichtung im Bereich einer Mündung von der Horizontalförderung zu der Vereinzelungsvorrichtung die zu einem Stoß zusammen gesteckten Gefäße, insbesondere die gestapelten Henkeleimer, mit ihrem jeweiligen Henkel in einer vorbestimmten Henkellage, beispielsweise relativ zur Förderrichtung nach links oder relativ zur Förderrichtung nach rechts, an die Vereinzelungsvorrichtung sowie gegebenenfalls deren Greifeinheit und/oder Halteeinheit bereitzustellen.

Gemäß einer anderen Ausführung, die mit den vorigen kombinierbar ist, umfasst das System ferner wenigstens eine Verschließstation, die dazu ausgelegt und eingerichtet ist, ein in der Abfüllstation befülltes Gefäß mit einem Deckel zu verschließen. Vorzugsweise ist die Verschließstation dazu ausgelegt und eingerichtet, dass befüllte Gefäß vollständig mit einem Deckel, vorzugsweise flüssigkeitsdicht und/oder luftdicht, zu verschließen. Die Verschließstation kann vorzugsweise unmittelbar förderstromabwärts der Abfüllstation angeordnet sein.

Die Erfindung betrifft ferner Verfahren zum Vereinzeln eines Gefäßes, insbesondere genau eines einzelnen Gefäßes, aus einem Stoß umfassend mehrere in einer Stoßrichtung ineinander steckende Gefäße. Mit dem erfindungsgemäßen Verfahren werden Gefäße, insbesondere Henkeleimer, die einen Boden, einen insbesondere kragenförmigen Radialvorsprung und einem sich vom Radialvorsprung zum Boden verjüngenden Gefäßabschnitt aufweisen, aus dem Stoß vereinzelt. Das erfindungsgemäße Verfahren wird nachfolgend kurz als Vereinzelungsverfahren bezeichnet.

Bei dem erfindungsgemäßen Verfahren wird ein erstes Gefäß in dessen Gefäßabschnitt von einer Greifeinheit erfasst und eine Halteeinheit fixiert ein in dem erstes Gefäß steckendes zweites Gefäß, insbesondere an dessen Radialvorsprung. Bei dem erfindungsgemäßen Verfahren wird, vorzugsweise während die Greifeinheit das erste Gefäß erfasst und die Halteeinheit das zweite sowie gegebenenfalls weitere Gefäße fixiert, die Greifeinheit mit dem ersten Gefäß von der Halteeinheit in der Stoßrichtung entfernt. Die Stoßrichtung kann beispielsweise in der Vertikalrichtung orientiert sein. Das erste Gefäß wird dann durch die Greifeinheit in der Vertikalrichtung aufwärts oder abwärts, vorzugsweise abwärts, von dem übrigen, vorzugsweise ortsfesten, Stoß Gefäße vereinzelt.

Bei einer bevorzugten Ausführung des erfindungsgemäßen Vereinzelungsverfahrens beaufschlagt die Greifeinheit das erste Gefäß an gegenüberliegenden Bereichen, insbesondere Umfangssegmenten, des Gefäßabschnitts mit einem radialen Anpressdruck, um das erste Gefäß zu erfassen. Die Greifeinheit kann das erste Gefäß insbesondere mithilfe von Backen mit dem radialen Anpressdruck beaufschlagen. Die Greifeinheit, insbesondere die Backen, können quer zur Stoßrichtung und/oder diametral gegenüberliegend mit dem Gefäßabschnitt des ersten Gefäßes in Kontakt gebracht werden, um es zu ergreifen. Durch die Greifeinheit, vorzugsweise die Backen, wirkt Anpressdruck quer zur Stoßrichtung, vorzugsweise in der Querrichtung oder alternativ in der Längsrichtung, auf das erste Gefäß ein.

Gemäß einer besonders bevorzugten Weiterbildung des erfindungsgemäßen Vereinzelungsverfahrens wird das erste Gefäß durch den aufgebrachten Anpressdruck deformiert. Durch das Deformieren des ersten Gefäßes können Klemmkräfte zwischen dem ersten Gefäß und dem darin steckenden zweiten Gefäß reduziert werden, damit sich das erste Gefäß leichter von dem zweiten Gefäß ablösen lässt. Das Deformieren des ersten Gefäßes erfolgt also vorzugsweise bevor das erste Gefäß durch translatorische Bewegung der Greifeinheit in der Stoßrichtung fort von der Haltereinrichtung bewegt wird, die das zweite sowie gegebenenfalls weitere Gefäße fixiert. Es kann bevorzugt sein, dass das erste Gefäß durch den Anpressdruck unter Ausbildung eines Spalts zwischen dem ersten Gefäß und dem zweiten Gefäß deformiert wird, um einen zwischen dem ersten Gefäß und dem zweiten Gefäß angeordneten Beziehungsweise gebildeten Zwischenraum zu Belüften. Durch Belüften des Zwischenraums durch den Deformationsspalt zwischen dem ersten Gefäß und dem zweiten Gefäß erfolgt ein Druckausgleich des Zwischenraums mit Umgebungsluft. Die Präsenz eines Unterdrucks zwischen dem ersten Gefäß und dem zweiten Gefäß kann auf diese Weise vermieden werden. Vorzugsweise wird das erste Gefäß durch den Anpressdruck elastisch und/oder reversibel deformiert. Besonders bevorzugt erfolgt durch den Anpressdruck keine Prägung, Stanzung oder andere permanente Deformierung des ersten Gefäßes. Der Anpressdruck, mit welcher die Greifeinheit auf das erste Gefäß einwirkt, um es zu erfassen, ist bevorzugt so auf das Gefäß abgestimmt, dass material- und/oder formbedingte Rückstellkräfte eine vorzugsweise vollständige oder zumindest im Wesentlichen vollständige Rückstellung des Gefäßes nach dem Lösen der Greifeinheit von dem Gefäß bewirken.

Gemäß einer bevorzugten Ausführung des erfindungsgemäßen Vereinzelungsverfahrens erfasst die Greifeinheit das erste Gefäß in einem Abstand, insbesondere von wenigstens 2 cm, vorzugsweise wenigstens 4 cm, vom Boden. Alternativ oder zusätzlich kann die Greifeinheit das erste Gefäß in einem bodennahen Drittel oder einer bodennahen Hälfte des Gefäßabschnitts ergreifen.

Bei einer bevorzugten Ausführung des erfindungsgemäßen Vereinzelungsverfahrens wird das erfasste erste Gefäß mittels der Greifeinheit, vorzugsweise bei Aufrechterhaltung des Anpressdrucks, von dem Stoß abgezogen, während das zweite und gegebenenfalls weitere Gefäße durch die Halteeinheit ortsfest gehalten werden.

Optional kann bei dem erfindungsgemäßen Vereinzelungsverfahren der Stoß verschachtelter (d. h.: ineinander gesteckter, vorzugsweise gestapelter) Gefäße als vertikaler Stapel der mehreren Gefäße, insbesondere mit einer Stapelhöhe zwischen 0,5 m und 2 m, vorzugsweise zwischen 1 Meters und 1,5 m, mittels einer Horizontalförderung, insbesondere einem Rollentisch, zu der Greifeinheit und/oder der Halteeinheit gebracht werden.

Bei einer bevorzugten Ausführung des Vereinzelungsverfahrens werden Gefäß mit einem jeweiligen Henkel bereitgestellt. Die Henkel des zweiten und gegebenenfalls weiterer Gefäße werden vor dem Vereinzeln des ersten Gefäßes von dem ersten Gefäß entfernt. Insbesondere wird der Hebel des zweiten Gefäßes sowie gegebenenfalls der Henkel weiterer Gefäße vor dem Vereinzeln des ersten Gefäßes von dem ersten Gefäß weggeschwenkt und/oder angehoben. Es kann zweckmäßig sein, dass der Stoß verschachtelter Gefäße mit einer vorbestimmten Henkellage an die Greifeinheit und/oder die Halteeinheit bereitgestellt wird. Beispielsweise kann eine Justiereinrichtung verwendet werden, um den Stoß mit einer vorbestimmten Henkellage, beispielsweise in Bezug auf eine Förderrichtung links oder rechts, geschwenkt bereitgestellt werden.

### Beispielverfahren

Nachfolgend wird eine besonders bevorzugte Ausführung eines erfindungsgemäßen Verfahrens beschrieben. Dabei wird zunächst wenigstens ein Stoß mehrerer ineinander verschachtelter Gefäße in einem Magazin bereitgestellt. Zwischen unmittelbar benachbarten Gefäßen des Stoßes werden Zwischenräume ausgebildet. Beispielsweise bildet sich ein Zwischenraum zwischen dem Boden des ersten Gefäßes und dem Boden des darin steckenden zweiten Gefäßes. Der Zwischenraum zwischen dem ersten und dem zweiten Gefäß wird seitlich durch einen Gefäßabschnitt des zweiten Gefäßes vollumfänglich begrenzt. Als Gefäße werden beispielsweise formgleiche Henkeleimer mit einem Füllvolumen zwischen 1 L und 50 L, vorzugsweise zwischen 5 Lund 25 L bereitgestellt. Die Henkeleimer haben in dem Beispiel eine ovale Querschnittsgestalt, die in Längsrichtung größer ist als in Querrichtung. Bei dem Beispiel hat jeder Henkeleimer einen Henkel mit in Längsrichtung diametral gegenüberliegenden Henkelgelenken. Die Henkeleimer sind zu anfangs in Vertikalrichtung ineinander gestapelt, wobei ein erster Henkeleimer zu unterst angeordnet ist. Bei dem Beispiel wird der Stapel Henkeleimer dann aus dem Magazin zu einer Vereinzelungsvorrichtung transportiert. Eine Justiereinrichtung bewirkt, dass der Stapel mit an einer vorbestimmten Seite, Beispielsweise links, angeordneten Henkeln an die Vereinzelungsvorrichtung bereitgestellt wird. In der Vereinzelungsvorrichtung angekommen erfasst eine Greifeinheit das erste Gefäß. Die Greifeinheit der Vereinzelungsvorrichtung ergreift beispielsweise zwei diametral in der Querrichtung gegenüberliegende Umfangssegmente eines Gefäßabschnitts des ersten Gefäßes, die sich zwischen dessen Boden und dessen zum Boden gegenüberliegender Öffnung befinden, in welcher der zweite Behälter steckt. Erfindungsgemäß ist vorzugsweise vorgesehen, dass die Greifeinheit das erste Gefäß nicht an dessen Bodenfläche durch einen Saugnapf oder dergleichen ergreift. Die Greifeinheit ergreift das erste Gefäß in der Stoßrichtung in einem gewissen Abstand zu dessen Bodenfläche. Insbesondere kann sodann durch die Greifeinheit ein Anpressdruck in der Radialrichtung auf das erste Gefäß ausgeübt werden, damit es sich verformt, wobei vorzugsweise ein Luftspalt oder Deformationsspalt ausgebildet wird, der sich vom oberen Ende des ersten Gefäßes hin zu einem Zwischenraum zwischen dem Boden des ersten Gefäßes und dem Boden des darin steckenden zweiten Gefäßes ausdehnt, damit der Zwischenraum mit Umgebungsluft belüftet wird. Vorzugsweise wird zeitgleich oder im Anschluss an das Ergreifen des ersten Gefäßes durch die Greifeinheit eine Halteeinheit mit dem zweiten Gefäß in Kontakt gebracht. Die Halteeinheit berührt das zweite Gefäß nahe oder unmittelbar an dessen Radialvorsprung. Beispielsweise kann der Stoß mittels der Greifeinheit von einer Horizontalförderung angehoben und zu der Halteeinheit hin bewegt werden und die Halteeinheit ergreift den mittels der Greifeinheit bereits angehobenen Stapel. Während die Greifeinheit das erste Gefäß von dem Stoß vereinzelt, fixiert die Halteeinheit das zweite Gefäß und eventuelle weitere Gefäße des Stoßes, die in dem zweiten Gefäß stecken. Die Halteeinheit kann zum Vereinzeln des ersten Gefäßes das zweite Gefäß vorzugsweise ortsfest halten oder von dem ersten Gefäß fortbewegen. Die Greifeinheit kann zum Vereinzeln des ersten Gefäßes das erste Gefäß vorzugsweise von dem zweiten Gefäß fortbewegen oder ortsfest halten. Zum Vereinzeln des ersten Gefäßes vom Stoß muss zumindest entweder das erste Gefäß oder die übrigen Gefäße des Stoßes eine Bewegung erfahren. Nachdem das erste Gefäß von dem Stoß vereinzelt wurde, kann aus mit der gleichen oder einer anderen Fördervorrichtung, beispielsweise Horizontalförderung, aus der Vereinzelungsvorrichtung entfernt werden. Es ist zum Beispiel denkbar, dass ein Tara-Gewicht des vereinzelten Gefäßes gemessen wird. Es kann bevorzugt sein, dass das vereinzelte Gefäß mit einer Beschriftung, einem Etikett oder dergleichen versehen wird. Zusätzlich oder alternativ kann das vereinzelte Gefäß mit einer Masse befüllt werden. Eine Waage kann verwendet werden, um zu messen, ob eine gewünschte Menge der Masse in das vereinzelte Gefäß eingefüllt wird oder wurde. Außerdem kann das vereinzelte und gegebenenfalls befüllte erste Gefäß mit einem Deckel verschlossen und insbesondere versiegelt werden. Nach dem Vereinzeln des ersten Gefäßes von dem Stoß ist der übrige Stoß, d. h. dass nunmehr zu unterste zweite Gefäß unmittelbar, sowie mittelbar ein in dem zweiten Gefäß steckendes drittes Gefäß und gegebenenfalls weitere Gefäße durch die Halteeinheit fixiert. Die Greifeinheit kann bei diesem Beispiel sodann nach dem Abgeben des vereinzelten Gefäßes an die Horizontalförderung wieder in der Stoßrichtung zu dem übrigen Stoß fahren. An dem Stoß, von dem das erste Gefäß vereinzelt wurde, kann die Greifeinheit nun das zweite Gefäß ergreifen. Zu diesem Zeitpunkt ist das zweite Gefäß zeitweilig von der ersten Halteeinheit fixiert und der zweiten der Greifeinheit ergriffen. Als nächstes soll das zweite Gefäß vereinzelt werden. Um das zweite Gefäß von dem Stoß vereinzeln zu können, muss es aus der Fixierung von der Halteeinheit gelöst werden. Wenn das zweite Gefäß unmittelbar von der Greifeinheit ergriffen ist, kann die Fixierung des Stoßes durch die Halteeinheit gelöst werden. Die Halteeinheit, beispielsweise deren Haltenasen, können zu diesem Zweck zurück, aus dem Eingriff mit dem Stoß heraus, verfahren werden. Nachdem die Fixierung des Stoßes mittels der Halteeinheit gelöst ist, wird der Stoß an dem zweiten Gefäß von der Greifeinheit getragen. Sodann verfährt die Greifeinheit, welche das zweite Gefäß und somit den gesamten Stoß trägt, in der Stoßrichtung um in etwa eine Länge, welche einer Höhe in Stoßrichtung des Radialvorsprungs des zweiten Gefäßes entspricht. Die Halteeinheit kann dann erneut mit dem Stoß am Radialvorsprung des dritten Gefäßes in Eingriff gebracht werden. Nun hält die Greifeinheit das zweite Gefäß und die Haltereinrichtung fixiert das dritte Gefäß. Demnach kann nun das zweite Gefäß als erstes, zu vereinzelndes Gefäß behandelt werden, und das dritte Gefäß als durch die Haltereinrichtung fixiertes zweites Gefäß.

Vorteilhafte Weiterbildungen sind in den abhängigen Ansprüchen angegeben. Weitere Eigenschaften, Merkmale und Vorteile der Erfindung werden durch die folgende Beschreibung einer bevorzugten Ausführungsform der Erfindung anhand der beiliegenden Zeichnung deutlich, in denen zeigen:
- Figur 1: eine Vereinzelungsvorrichtung mit einem Stoß Gefäße;
- Figur 2a: die Vereinzelungsvorrichtung gemäß Figur 1, wobei Henkel mehrerer Gefäße von dem untersten Gefäß entfernt sind;
- Figur 2b: eine Draufsicht auf die Vereinzelungsvorrichtung gemäß Figur 2a;
- Figur 2c: eine Schnittansicht durch die Vereinzelungsvorrichtung und mehrere Gefäße gemäß Figur 2a gemäß Schnittlinie C-C;
- Figur 3a: eine Schnittansicht der Vereinzelungsvorrichtung;
- Figur 3b: eine Schnittansicht der Vereinzelungsvorrichtung während das erste Gefäß vom Stoß abgezogen wird;
- Fig. 3c: eine perspektivische Detailansicht der Vereinzelungsvorrichtung gemäß Figur 3b;
- Figur 4a: eine schematische Darstellung eines Gefäßes und einer Backe einer Greifeinrichtung mit Blick in Längsrichtung;
- Figur 4b: eine schematische Schnittansicht des Gefäßes und der Backe gemäß Figur 4a;
- Figur 4c: eine Draufsicht auf das Gefäß und die Backe gemäß Figur 4a;
- Figur 4d: eine Ansicht des Gefäßes und der Backe gemäß Figur 4a von unten;
- Figur 4e: eine schematische Darstellung des Gefäßes und der Backe gemäß Figur 4a mit Blick in Querrichtung;
- Figur 5a: eine schematische Seitenansicht der Backe gemäß Figur 4a mit Blick in der Längsrichtung;
- Figur 5b: eine detaillierte Schnittansicht der Backe gemäß Figur 4b gemäß Schnittlinie B-B;
- Figur 5c: eine Draufsicht auf die Backe gemäß Figur 4c;
- Figur 5d: eine Darstellung der Backe gemäß Figur 5a mit Blickrichtung in Querrichtung auf die Aufnahmen/ Ausnehmungen;
- Figur 6: eine Draufsicht auf ein System zum Befüllen von Gefäßen, dass eine Vereinzelungsvorrichtung gemäß Figur 1 umfasst; und
- Figur 7: eine Draufsicht auf die Vereinzelungsvorrichtung des Systems gemäß Figur 6.

In der nachfolgenden Beschreibung bevorzugter Ausführungsformen der Erfindung anhand der beiliegenden Figuren werden für dieselben oder ähnliche Komponenten zur Vereinfachung der Lesbarkeit dieselben oder ähnliche Bezugszeichen verwendet.

Eine erfindungsgemäße Vereinzelungsvorrichtung oder Vorrichtung zum Vereinzeln eines Gefäßes aus einem Stoß umfassend mehrere Gefäße wird nachfolgend im Allgemeinen mit dem Bezugszeichen 1 bezeichnet. Die Vereinzelungsvorrichtung 1 umfasst als wesentliche Bestandteile eine Greifeinheit 11 zum Erfassen eines ersten Gefäßes 20 und eine Halteeinheit 31 zum Fixieren des zweiten Gefäßes 220 sowie gegebenenfalls weiterer Gefäße des Stoßes 200.

In der nachfolgenden Beschreibung bevorzugter Ausführungen anhand der beiliegenden Figuren wird ein Gefäß 20, 220 im Allgemeinen als Henkeleimer dargestellt. Es sei klar, dass im Rahmen der vorliegenden Offenbarung auch anders und/oder unterschiedlich geformte und/oder dimensionierte Gefäße in einer erfindungsgemäßen Vereinzelungsvorrichtung 1 aus einem Stoß vereinzelt werden können. Die Gefäße 20, 220 haben einen Boden 21, 221, eine zum Boden gegenüberliegende Öffnung 22, 222, wenigstens einen Radialvorsprung 25, 225, und einen sich vom Radialvorsprung 25, 225 erstreckenden und verjüngenden Gefäßabschnitt 23, 223. Der Boden 21, 221 und der Gefäßabschnitt 23, 223 können als kontinuierliche, geschlossene Flächen realisiert sein. Das Gefäß 20, 220 ist mit einer flüssigen, pastösen, riesel- oder schüttfähigen Masse, vorzugsweise einem Baustoff, wie eine Farbe, befüllbar.

In den nachfolgend abgebildeten bevorzugten Ausführungen stecken die Gefäße 20, 220 in einander und bilden einem Stoß 200 mit einer Stoßrichtung S. Die Stoßrichtung S korrespondiert hier mit der Symmetrieachse der Henkeleimer. In den abgebildeten Ausführungen ist die Stoßrichtung S in Vertikalrichtung Z ausgerichtet. Andere Orientierungen der Stoßrichtungen sind im Rahmen der vorliegenden Erfindung denkbar, jedoch ist es bevorzugt, dass die Gefäße 20, 220 in der Vertikalrichtung Z gestapelt sind, um den Stoß 200 zu bilden. Bei den zu einem Stoß 200 gestapelten Gefäßen 20, 220 ist das erste Gefäß 20, welches von den übrigen in der Vereinzelungsanlage 1 vereinzelt wird, in der exemplarisch dargestellten bevorzugten Ausführung am in Vertikalrichtung Z niedrigen Ende des Stapels angeordnet. Gemäß einer alternativen, nicht dargestellten Ausführung könnte das erste Gefäß am in Vertikalrichtung Z hohen Ende des Stapels angeordnet sein, um dort von dem Stoß abgezogen zu werden.

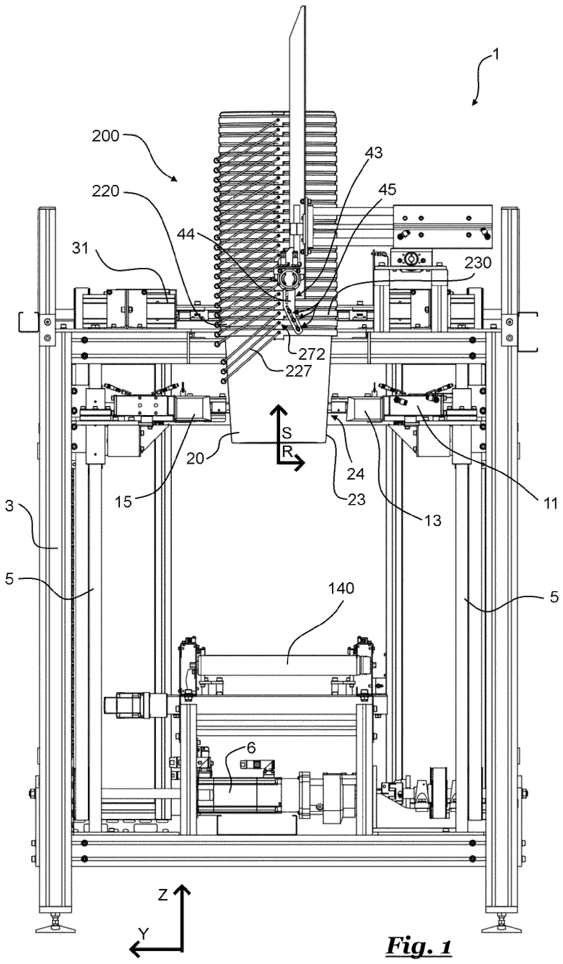

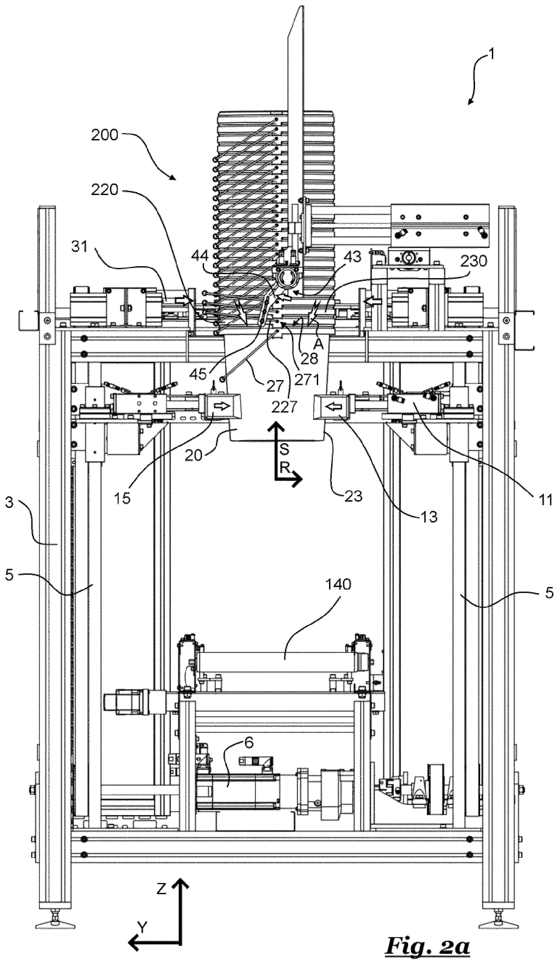

Figur 1 und Figur 2a zeigen eine Vorrichtung 1 zum Vereinzeln eines ersten Gefäßes 20 aus einem Stoß 200, der ein zweites Gefäß 220 und zahlreiche weitere in einander steckende Gefäße umfasst. Die Vorrichtung 1 umfasst eine Greifeinheit 11 und eine Halteeinheit 31.

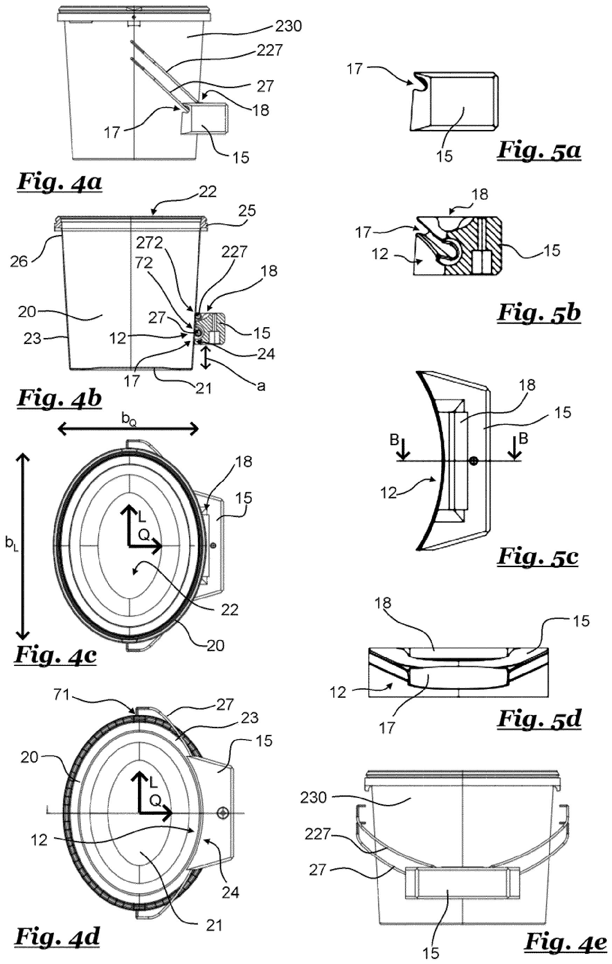

Die Greifeinheit 11 ist auf die Gefäße 20, 220 formabgestimmt, wie nachfolgend anhand der Figuren 4a bis 4e und 5a bis 5d im Detail beschrieben. Die Greifeinheit 11 hat einen in Figur 1 dargestellten passiven Zustand, in dem die Greifeinheit 11 das erste Gefäß 20 und damit den Stoß 200 freigibt.

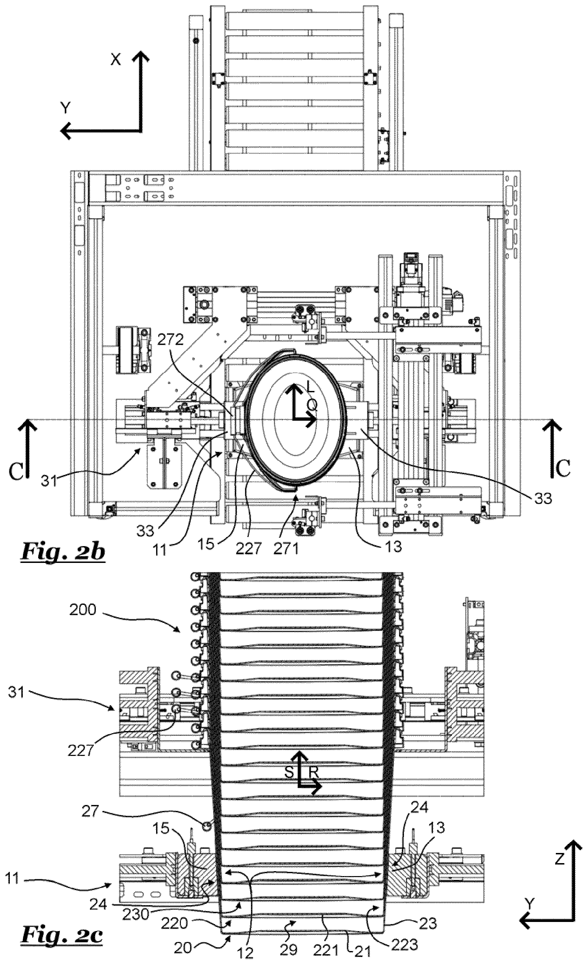

Figur 2c zeigt eine Schnittansicht des Stoßes 200 Gefäße 20, 220, 230 gemäß der Schnittlinie C-C von Figur 2b. Die Greifeinheit 11 ist im aktiven Zustand und steht mit den beiden Backen 13, 15 an gegenüberliegenden Umfangssegmenten des Gefäßabschnitts 23 in Berührkontakt mit dem ersten Gefäß 20. Das zweite Gefäß 220 steckt in dem ersten Gefäß 20. Das dritte Gefäß 230 steckt in dem zweiten Gefäß 220, usw.

Zwischen dem ersten Gefäß 20 und dem zweiten Gefäß 220 ist ein Zwischenraum 29 gebildet. Der Zwischenraum 29 erstreckt sich in der Stoßrichtung S zwischen dem Boden 21 des ersten Gefäß 20 und dem Boden 221 des zweiten Gefäßes 220. In Radialrichtung bzw. Quer- und Längsrichtung wird der Zwischenraum 29 durch den zylinderhülsenförmigen Gefäßabschnitt 23 des ersten Gefäßes 20 begrenzt.

Wenn die Gefäße beispielsweise als Kunststoffeimer in einem Spritzguss-Verfahren hergestellt und vor dem Abkühlen in einander gesteckt wurden, kann die in dem Zwischenraum 29 befindliche Luft infolge der Abkühlung einen niedrigeren Druck aufweisen als die Umgebungsluft, sodass im Zwischenraum 29 ein Unterdruck vorherrscht, welcher die Gefäße 20, 220 zusammenzieht. Durch eine Belüftung A des Zwischenraums 29 kann der dortige Luftdruck an den Umgebungsluftdruck angepasst werden, um die Druckdifferenz und daraus folgende Haltekraft abzubauen.

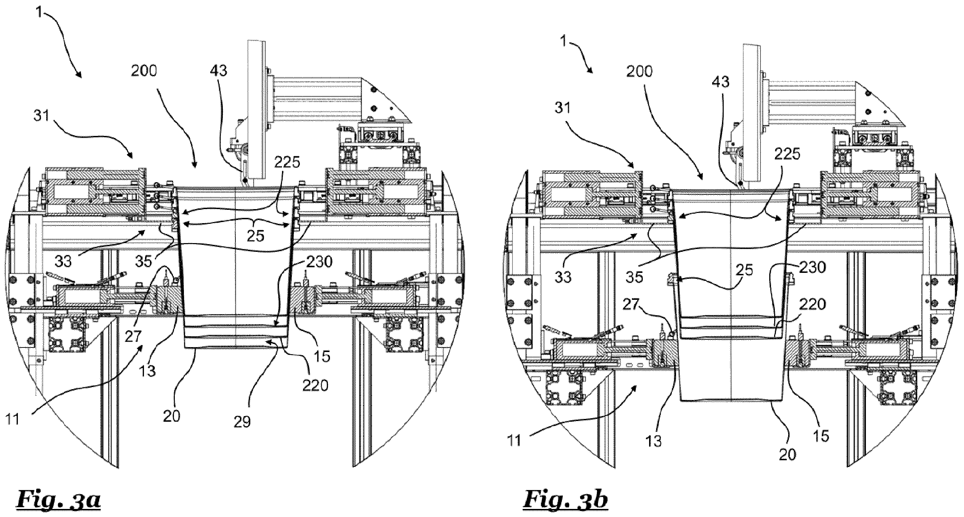

Figur 2a und Figur 3b zeigen die Greifeinheit 11 in ihrem aktiven Zustand, in dem die Greifeinheit in Berührkontakt mit dem ersten Gefäß 20 steht. In dem aktiven Zustand kann die Greifeinheit 11 das Gefäß 20 mit einem radialen Anpressdruck beaufschlagen. Durch Aufbringen des radialen Anpressdrucks wird das erste Gefäß 20 deformiert, sodass sich ein Spalt 28 zwischen dem ersten Gefäß 20 und dem zweiten Gefäß 220 bildet. Durch den Spalt 28 kann die Belüftung A erfolgen. Durch diese Belüftung A wird der schematisch in Figur 2c dargestellte Zwischenraum 29 belüftet.

Die Greifeinheit 11 befindet sich in den Figuren 1 und 2a bis 2c in einer Übernahmestellung nahe der Halteeinheit 31. In der Übernahmestellung ist die Greifeinheit 11 in der Vertikalrichtung Z von der Fördervorrichtung 140 entfernt angeordnet. Die Fördervorrichtung ist als Horizontalförderung 140 in Form eines Rollentischs realisiert. Die Rotationsachsen der Rollen erstrecken sich in der zweiten Horizontalrichtung Y, sodass die Transportrichtung T mit der ersten Horizontalrichtung X korrespondiert. Mittels der Horizontalförderung 140 kann ein Stoß 200 zu der Vereinzelungsvorrichtung 1 gefördert werden. Alternativ oder zusätzlich kann mittels der Horizontalförderung ein vereinzeltes Gefäß 20 von der Vereinzelungsvorrichtung fort, zu nachfolgenden Stationen des Systems 100 weitertransportiert werden.

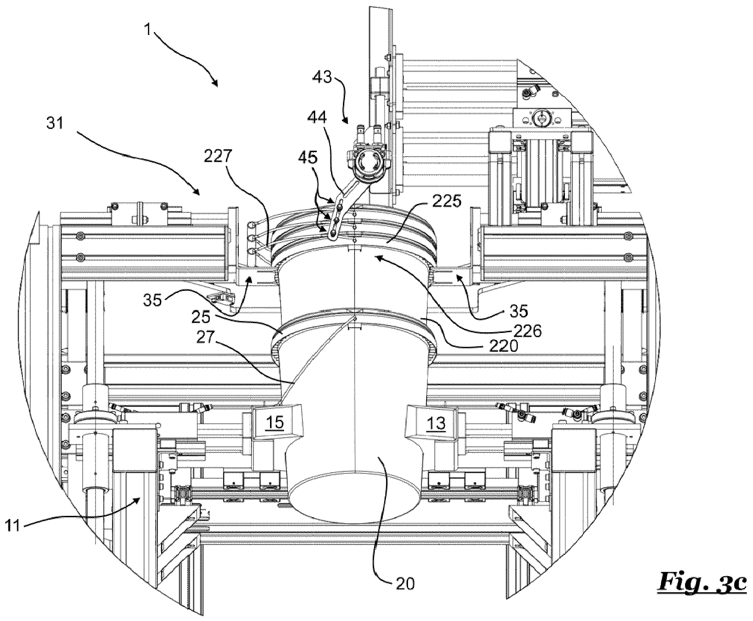

Die Greifeinheit 11 ist an dem Gestell 3 der Vorrichtung 1 in der Vertikalrichtung Z translatorisch beweglich gelagert. Benachbart zu der Horizontalförderung 140 sind vertikale Führungsschienen 5 für die Greifeinheit 11 angeordnet. Eine Antriebseinheit 6, wie ein Elektromotor, ist dazu ausgelegt und eingerichtet, die Greifeinheit 11 in der Vertikalrichtung Z auf und ab zu bewegen. Die Halteeinheit 31 ist an dem Gestell 3 in der Vertikalrichtung Z ortsfest gehalten. Wenn die Halteeinheit 31 das erste Gefäß 20 in dem aktiven Zustand ergriffen hat, kann die Halteeinheit 31 in Stoßrichtung S und somit in dem vorliegendem Beispiel in der Vertikalrichtung Z von dem zweiten Gefäß 220 und den übrigen Gefäßen des Stoßes 200 entfernt und so in eine Abstreifstellung gebracht werden. Indem die Greifeinheit 31 gemeinsam mit dem ersten Gefäß 20 in der Stoßrichtung S von der Halteeinheit 31, welche das zweite Gefäß 220 sowie gegebenenfalls weitere Gefäße 230 des Stoßes 200 in Bezug auf die Stoßrichtung S ortsfest hält, entfernt wird, wird das erste Gefäß 20 mittels der Vorrichtung 1 vereinzelt (Fig. 3).

Wenn die Greifeinheit 31 in der Vertikalrichtung Z eine von der Halteeinheit 11 entfernte Stellung einnimmt, kann die Greifeinheit ein vereinzeltes Gefäß 20 an die Horizontalförderung 140 übergeben. Es sei klar, dass in einer Stellung der Greifeinheit 11 nahe der Fördervorrichtung die Greifeinheit 11, beispielsweise vor Beginn eines Vereinzelungsvorgangs, einen Stoß 200 aus Gefäßen 20, 220, 230 von der Fördervorrichtung aufnehmen kann. Die Greifeinheit 11 11 kann einen Stoß 200 von der Transportvorrichtung anheben und zu der Halteeinheit 31 bringen.

Nachdem ein erster Behälter 20 von dem Stoß 20 200 mittels der Greifeinheit 31 entfernt wurde, befindet sich anschließend das zweite Gefäß 220 an der untersten Position des Stoßes. Das zweite Gefäß 220, das sich an der untersten Position des Stoßes 200 befindet, wird derweil (während und unmittelbar nach dem Vereinzeln des ersten Gefäßes 20) von der Halteeinheit 31 getragen. Bevor dieses Gefäß vereinzelt werden kann, muss zunächst die Halteeinheit 31 das zweite Gefäß 220 freigeben und das dritte Gefäß 230 fixieren. Zu diesem Zweck wird das zweite Gefäß 220 mit der Greifeinheit 11 ergriffen. Sodann kann die Halteeinheit 31 von dem Stoß 200 gelöst werden, ohne dass der Stoß dadurch unkontrolliert aus der Vorrichtung 1 hinausfällt. Die Greifeinheit 11 kann dann den gesamten Stoß 200 in der Stoßrichtung S um eine zur Höhe des Radialvorsprungs 225 korrespondierenden Höhe bewegen, sodass die Halteeinheit 31 anschließend mit dem dritten Gefäß 230 in Eingriff gebracht werden kann. Wenn die Halteeinheit 31 das dritte Gefäß 230 an dessen kragenförmigen Radialvorsprung fixiert, ist das zweite Gefäß 220 von der Haltereinrichtung 31 freigegeben und kann nun als erstes Gefäß behandelt werden (und das vormals dritte Gefäß 230 als zweits Gefäß 220).

Zur Verwendung mit Gefäßen, die Henkel aufweisen, wie die in den Figuren dargestellten Henkeleimer, ist es zweckmäßig, wenn die Vorrichtung 1 mit einem Manipulator 43 zum Entfernen der Henkel 227 des zweiten Gefäßes 220 und gegebenenfalls weiterer Gefäße 230 von dem ersten Gefäß 20 ausgestattet ist. Ein solcher Manipulator 43 ist in den Figuren 1 und 2a abgebildet. Der Manipulator 43 umfasst einen Schwenkarm 44, der drehbar an dem Gestell 3 der Vorrichtung 1 gehalten ist. An dem Schwenkarm 44 sind drei Mitnehmer 45 befestigt. Der Manipulator 43 umfasst einen Mitnehmer 45 für den Henkel 227 des zweiten Gefäßes 220. Der zweite und dritte Mitnehmer 45 sind optional für weitere Henkel bereitgestellt.

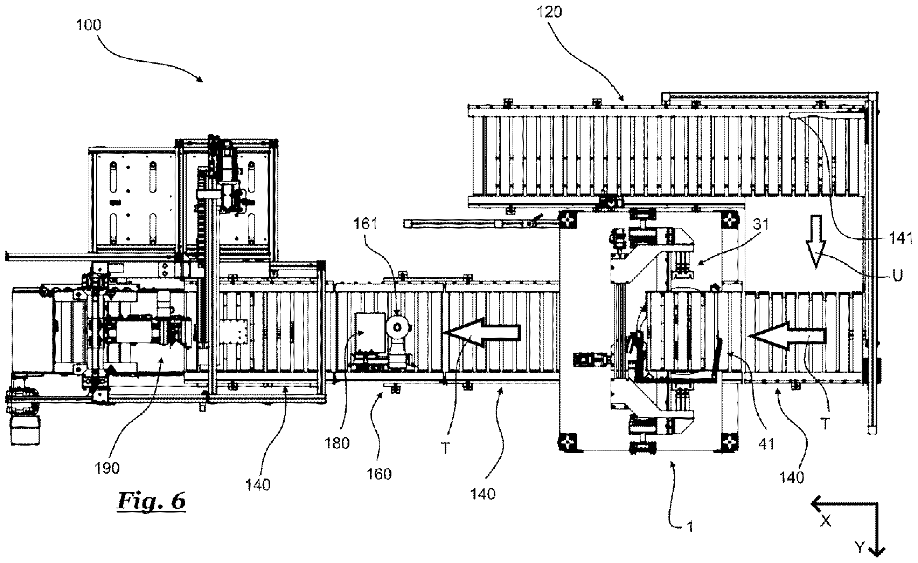

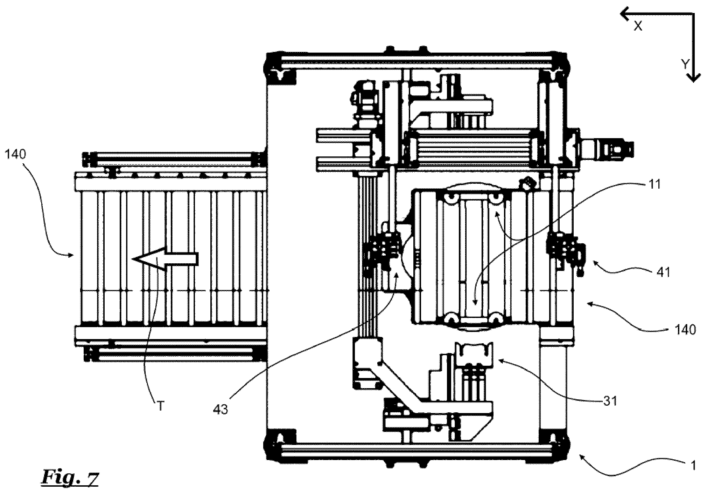

Der zweite Eimer 220 hat in der Längsrichtung L gegenüberliegende Henkelgelenke 271, die eine Schwenkachse für den Henkel 227 definieren, die sich in der Längsrichtung L erstreckt. Bei dem vorliegendem Beispiel ist die Längsrichtung L der Gefäße 20, 220 mithilfe des nachfolgend anhand der Figuren 6 und 7 beschriebenen Justiervorrichtung 41 korrespondierend zu der Transportrichtung T und der ersten Horizontalrichtung X ausgerichtet. Zum Entfernen des Henkels 227 vom ersten Gefäß 20 wird der Mitnehmer 45 des Manipulators 43 mit dem Henkel 227 in Kontakt gebracht und anschließend weiter um das Henkelgelenk 271 bewegt, sodass der Henkel 227 aus seiner Ruhelage am Gefäßabschnitt 23 des ersten Gefäßes 20 fortgedrängt wird. Der Mitnehmer 45 wird in der Querrichtung Q bewegt. Wie beispielsweise in den Figuren 1 und insbesondere Figur 2a abgebildet, ist der Mitnehmer 45 an einem Schwenkarm 44 gehalten, der um eine zu der ersten Horizontalrichtung X korrespondierende Schwenkachse drehbar ist. Der Schwenkarm 44 hat eine Ablegestellung, in der er von den Henkeln 27, 227 entfernt positioniert ist (Figur 1) und eine Anhebestellung, in welcher er zumindest den zweiten Henkel 227 von dem ersten Gefäß 20 fortdrängt (Figur 2a). Der Mitnehmer 45 kann zum Verbringen des Henkels 27 aus der Ablegestellung in die Anhebestellung eine im Wesentlichen horizontale Bewegung in der zweiten Horizontalrichtung Y vollführen und zum Entfernen und Anheben des zweiten Henkels 227 ausnutzen, dass dieser am Henkelgelenk 271 festgelegt ist.

Figur 3a zeigt den in der Vereinzelungsvorrichtung 1 angeordneten Stoß 200 Gefäße 20, 220, 230. Die die Halteeinheit 31 stützt den Stoß am kragenförmigen Radialvorsprung 225 des zweiten Gefäßes 220 ab. Die Halteeinheit 31 umfasst eine Stützvorrichtung 33 mit zwei einander diametral in der Radialrichtung gegenüberliegenden Haltenasen 35. Die Haltenasen 35 stehen in der Radialrichtung R korrespondierend zur Querrichtung Q in Richtung auf das zweite Gefäß 220 vor. In der abgebildeten Stellung fixieren die Haltenasen 35 das zweite Gefäß 220. Die Haltenasen 35 können, wie in den Figuren 3a, 3b und 3c abgebildet, mit dem zweiten Gefäß 220 in Kontakt stehen. Alternativ können die Haltenasen 35 in der Radialrichtung R bzw. zweiten Horizontalrichtung Ytranslatorisch von dem Stoß 200 fortbewegt werden, sodass der Stoß 200 in der Vertikalrichtung Z ungehindert durch die Halteeinheit 31 beweglich ist. Wenn die Haltenasen 35 in der Horizontalrichtung Yzurückversetzt sind, kann beispielsweise in dem unbelegten Zustand (wie in Figur 7 abgebildet) eine neuer Stoß 200 in die Vereinzelungsvorrichtung 100 eingesetzt werden, oder im Anschluss an das Vereinzeln des ersten Gefäßes 20 von dem Stoß 200 kann das zweite Gefäß 220 von der Greifeinheit 11 ergriffen und in der Stoßrichtung S bewegt werden, um die Halteeinheit 31 mit dem dritten Gefäß 230 in Kontakt zu bringen (wie oben beschrieben).

Die Figuren 3b und 3c zeigen die Vereinzelungsvorrichtung 1 gemäß Figur 3a, bei der das erste Gefäß 20 mittels der Greifeinheit 11 vom übrigen Stoß 200 abgezogen ist. Die Greifeinheit 11 befindet sich in Figur 3b bzw. 3c in der Abstreifstellung und in Figur 3a in der Übernahmestellung.

Figur 3c lässt die beiden beweglichen Haltenasen 35 gut erkennen. Die Haltenasen 35 sind einander gegenüberliegend angeordnet und beide in zur Stoßrichtung S radialer Richtung R an den Stoß 200 herangefahren. Die Haltenasen 35 sind in der Stoßrichtung S unmittelbar unterhalb des Radialvorsprungs 225 des zweiten Gefäßes 220 angeordnet. In der Stoßrichtung S bilden sie gemeinsam einen formschlüssigen Anschlag für den hier ringflanschförmig dargestellten Radialvorsprung 225. Die beiden translationsbeweglichen Haltenasen 35 bilden so eine Stützvorrichtung 33 für das zweite Gefäß. Alternativ könnte die Stützvorrichtung beispielsweise nur eine bewegliche Haltenase und ein stationäres Gegenlager umfassen (nicht dargestellt). Weiter alternativ ist es denkbar, dass nur eine einzige insbesondere gabelförmige Stützvorrichtung mit zwei in derselben Querrichtung beweglichen Haltenasen oder Zinken an dem Radialvorsprung des zweiten Gefäßes angreift (nicht dargestellt).

Die abgebildeten Haltenasen 35 umfassen drei Flügel zum Kontaktieren des zweiten Gefäßes. Die Haltenase 35 umfasst einen Mittelflügel, der beidseitig von Seitenflügeln flankiert ist. Die Seitenflügel sind in der Radialrichtung länger als der Mittelflügel. Der Mittelflügel ist quer zur Radialrichtung breiter als die beiden Seitenflügel, insbesondere breiter als beide Seitenflügel kumuliert. Die Haltenasen 35 erstrecken sich in ihrem jeweiligen mit dem zweiten Gefäß 220 in Eingriff stehenden Kontaktbereich in Relation zur Stoßrichtung um jeweils etwa 10° - 30°, vorzugsweise etwa 15°, in Umfangsrichtung. Der Kontaktbereich wird hier exemplarisch durch den Mittelflügel und die Seitenflügel aufgespannt. Der Kontaktbereich hat eine Halteweite. Die Halteweite der Haltenasen 35 ist vorzugsweise kleiner als die Backenweite der Backen 13, 15.

Die Haltehöhe (hier: Blechdicke) der Haltenasen 35 ist vorzugsweise wesentlich kleiner als die Backenhöhe, beispielsweise kann die Haltehöhe etwa 0,1 mm bis 2 mm, vorzugsweise 0,2 mm bis 1,5mm, insbesondere 0,5mm bis 1,0 mm betragen. Die Halteweite der Haltenasen ist vorzugsweise deutlich größer als die Haltehöhe. Die Halteweite beträgt vorzugsweise 2,5 cm bis 25 cm, vorzugsweise 5 cm bis 15 cm. Bei der abgebildeten Ausführung sind die Haltenasen 35 durch flache Metallbleche gebildet, die sich in der Radialrichtung und quer dazu in Horizontalrichtung ausdehnen. Die Länge der Haltenasen 35 in der Radialrichtung ist derart auf die Gefäße abgestimmt, dass die Halteeinheit 31 nicht mit einem in Horizontalrichtung angehobenen Henkel 227 kollidiert, während die Haltenasen 35 in Radialrichtung R an das Gefäß 220 herangefahren werden.

Relativ zu dem im Wesentlichen hohlzylindrischen Gefäßabschnitt 223 sind die Haltenasen 35 in der in Figur 3c dargestellten Stellung berührungsfrei. Alternativ könnte wenigstens eine Haltenase 35 oder beide Haltenasen mit einem am Radialvorsprung 225 angrenzenden Bereich 226 des Gefäßabschnitts 223 in Berührung stehen. Optional könnte die Stützstruktur nur mit einem am Radialvorsprung 225 angrenzenden Bereich 226 des Gefäßabschnitts 223 in einen Berührkontakt bringbar sein oder stehen, um das zweite Gefäß form- und/oder kraftschlüssig zu ergreifen, und relativ zu dem Radialvorsprung 225 berührungsfrei (nicht dargestellt).

Die Figuren 4a bis 4e zeigen schematische Darstellungen eines als Henkeleimer gebildeten Gefäßes 20 (bzw. dritten Gefäßes 230) kooperierend mit einer speziellen Ausführung einer Backe 15 der Greifeinheit 11. Anders als die zuvor beschriebenen und dargestellten Backen ist die in den Figuren 5a bis 5b und den Figuren 4a bis 4e dargestellte Backe 15 mit Ausnehmungen 17, 18 für Henkel 27, 227 ausgestattet.

Die Figuren 4a und 4e zeigen eine schematische Darstellung eines dritten Gefäßes 230 ohne Henkel, den Henkel 27 des (nicht abgebildeten) ersten Gefäßes sowie den Henkel 227 des (ebenfalls nicht abgebildeten) zweiten Gefäßes. Figur 4b zeigt das erste Gefäß mit seinem Henkel und der Backe 15 im Querschnitt sowie den Griffabschnitt 272 des Hebels 227 des zweiten Gefäßes (nicht dargestellt). Eine derartige Backe 15 kann insbesondere zur Verwendung einer Vereinzelungsvorrichtung für Eimer vorgesehen sein, deren Henkel in der Ruhelage an der unteren Hälfte des Gefäßabschnitts 23 anliegen.

Die Backe 15 hat eine Ausnehmung 17 in ihrer mit dem Umfangssegment 24 ersten Gefäßes 20 in Kontakt zu bringenden Kontaktfläche 12 zum Aufnehmen eines Teils (hier: des Griffabschnitts 72) des Henkels 27 des ersten Gefäßes 20. Durch die Ausnehmung 17 wird sichergestellt, dass die Backe den Henkel 27 beim Kontaktieren des Umfangssegments 24 am Gefäßabschnitt 23 nicht in den Gefäßabschnitt 23 hineinpresst, was anderenfalls eine unerwünschte Deformation oder gar eine Beschädigung des ersten Gefäßes 20 zur Folge haben könnte.

Die Backe 15 hat außerdem eine zweite Ausnehmung 18 für einen Teil (hier: den Griffabschnitt 272) des Henkels 227 des zweiten Gefäßes 220 an ihrer der Haltereinrichtung 31 in der Stoßrichtung S zugewandten Oberseite 19. In dieser zweiten Ausnehmung 18 kann ein Henkel 27, 227 ruhen. Wenn der von der Backe 15 gehaltene Eimer relativ zu der Haltereinrichtung in Stoßrichtung S bewegt wird, oder falls der in der Ausnehmung 18 ruhende Henkel 227 von dem Gefäß 20 entfernt wird, stellt die Backe 15 mit der Ausnehmung 18 kein Hindernis für den Henkel dar.

In den Figuren 1 und 2a ist die Greifeinheit 11 mit in Radialrichtung R gegenüberliegenden Backen 13, 15 abgebildet. Bei der in Figur 1 dargestellten Stellung sind die Backen 13, 15 in der Radialrichtung R von dem Stoß 200 entfernt angeordnet. Sie geben die Umfangssegmente 24 an den Gefäßabschnitten 23 des ersten Gefäßes 20 frei.

Um das erste Gefäß 20 zu ergreifen, werden die Backen 13, 15 der Greifeinheit 11 translatorisch bewegt, bis sie in den in Figur 2a abgebildeten Kontakteingriff mit dem ersten Gefäß 20 gelangen. Die Backen 13, 15 befinden sich mit Umfangssegmenten 24 des Gefäßes 20 in Berührkontakt, die eine Erstreckung in der Höhenrichtung des Gefäßes sowie in der Längsrichtung L des Gefäßes haben. Die Backenweite der Backen in Längsrichtung ist kleiner als die Längsbreite des Gefäßes. Bei der exemplarisch abgebildeten Ausführung ist die Backenweite in der Längsrichtung mehr als halb so groß jedoch kleiner als drei Viertel der Längsbreite des Gefäßes. Die Backenhöhe ist kleiner als die Hälfte der Höhe des Gefäßabschnitts. Die Kontaktfläche 12 der Backe 13 bzw. 15 ist durch ihre jeweilige Backenweite und Backenhöhe bestimmt. Die Kontaktfläche 12 ist formkorrespondierend zu der Außenseite des Gefäßes 20 gekrümmt. Die Backenweite ist vorzugsweise größer als die Backenhöhe. Die Backenhöhe kann beispielsweise 1 cm bis 10 cm betragen, vorzugsweise 2 cm bis 5 cm. Die Backenweite kann beispielsweise 2 cm bis 30 cm betragen, insbesondere 5 cm bis 20 cm, vorzugsweise 10 cm bis 15 cm.

Die in den Figuren 4a bis 4b und 5a bis 5d dargestellte Backe 15 hat zwei Ausnehmungen 17 und 18. Alternativ ist es denkbar, dass die Backe 15, wie in den Figuren 1 und 2a bis 2c dargestellt frei von Ausnehmungen an ihrer Kontaktfläche 12 ausgebildet ist, oder nur mit entweder der Ausnehmungen 17 an der Kontaktfläche oder der Ausnehmung 18 an der Oberseite.

Wie exemplarisch in Figur 4b dargestellt, steht die Backe 15 in der unteren Hälfte des Gefäßabschnitts 23 mit einem Umfangssegment 24 der Außenseite des Gefäßes 20 in fllächigen Berührkontakt. Zwischen dem Boden 21 und der Backe 15 ist ein Abstand a von wenigen Zentimetern. In Figur 4c sind die Querbreite b_{Q} und die Längsbreite b_{L} des Gefäßes 20 schematisch dargestellt.

In den Figuren 4a-4e wird eine bevorzugte Ausführung eines Gefäßes 20 schematisch als Henkeleimer mit ovaler Grundfläche abgebildet. Die Grundflläche des Gefäßes dehnt sich in Bezug auf die Symmetrieachse in einer Querrichtung Q und einer dazu orthogonalen Längsrichtung L aus. Die sich in der Querrichtung Q erstreckende Querbreite b_{Q} des Gefäßes 20 ist kleiner als die sich in der Längsrichtung L erstreckende Längsbreite b_{L}.

Das in den Figuren 4a-4e abgebildete Gefäß 20 entspricht im Wesentlichen dem in Figur 2b dargestellten. Bezugnehmend auf Figur 2b ist zu erkennen, dass in der Vereinzelungsvorrichtung 1 der Stoß 200 Gefäße 20, 220 mit deren Längsrichtung L korrespondierend zur ersten Horizontalrichtung X und Transportrichtung T ausgerichtet ist. Die Querrichtung Q ist quer dazu, korrespondierend zur zweiten Horizontalrichtung Y ausgerichtet. Wie in Figur 2a und 2c zu erkennen ist, ist der Stoß 200 ist vertikal gestapelt, sodass die Stoßrichtung S mit der Vertikalrichtung Z korrespondiert. Die Querrichtung Q der Gefäße 20 ist korrespondierend zu der Radialrichtung R ausgerichtet, in der die Backen 13, 15 und die Stützvorrichtungen 33 sich translatorisch zum Kontaktieren des Stoßes zu ihm hin und zum Freigeben des Stoßes 200 von ihm fort bewegen. Bei der hier abgebildeten bevorzugten Ausführung bewegen sich die Stützvorrichtung 33, die Backen 13, 15 wie auch der Mitnehmer 45 in der zweiten Horizontalrichtung Yquer zur Transportrichtung T. Andere Ausrichtungen der Greifeinheit 11, der Halteeinheit 31 und/oder des Manipulators 45 sind im Rahmen der vorliegenden Erfindung denkbar.

In Figur 6 werden die Vereinzelungseinrichtung 1 und das System 100 zum Befüllen eines Gefäßes 20 zur Vereinfachung des Verständnisses in einem dreidimensionalen Raum beschrieben, der sich in einer Vertikalrichtung Z ausdehnt sowie in einer ersten Horizontalrichtung X und einer zweiten Horizontalrichtung Y. Die Vertikalrichtung Z kann die Richtung sein, in der die Schwerkraft auf das System 100, die Vorrichtung 1 und/oder die Gefäße 20, 220 wirkt. Eine erste horizontale Richtung X kann definiert sein durch eine erste Hautperstreckungsrichtung oder Förderrichtung bzw. Transportrichtung T der Vorrichtung 1 und/oder Anlage 100. Eine zweite Horizontalrichtung Y erstreckt sich quer, insbesondere senkrecht, zu der Vertikalrichtung Z und quer, insbesondere senkrecht, zu der ersten Horizontalrichtung X.

Figur 6 zeigt ein erfindungsgemäßes System 100 zum Befüllen von Gefäßen mit einer flüssigen, pastösen, riesel- oder schüttfähigen Masse. Das System 100 umfasst als wesentliche Bestandteile eine Vereinzelungsvorrichtung 1 wie oben beschrieben und eine Abfüllstation 160 mit einer Abgabevorrichtung 161 zum Befüllen eines Gefäßes. In der Transportrichtung T ist die Abfüllstation 160 stromabwärts der Vereinzelungsvorrichtung 1 angeordnet. Die Transportrichtung T erstreckt sich im Wesentlichen in der ersten Horizontalrichtung X.

Das System 100 kann als Transportvorrichtung unter anderem einen Rollentisch oder andere Horizontalförderung 140 umfassen. Das System 100 umfasst ein Magazin 120, in dem ein Stoß oder mehrere Stöße (nicht im Detail dargestellt) vorgehalten werden können. Aus dem Magazin 120 kann ein Stoß beispielsweise mittels eines Schiebers 141 zu der Horizontalförderung 140 verbracht werden, beispielsweise wie abgebildet durch eine Bewegung in der zweiten Horizontalrichtung Y.

Im Vorlauf der Vereinzelungsvorrichtung 1 ist eine Justiervorrichtung 41 angeordnet, welche bewirkt, dass ein Stoß der Vereinzelungsvorrichtung stets mit in einer vorbestimmten Richtung quer zur Transportrichtung T (hier: nach links) umgelegten Henkel übergeben wird. Während ein Stoß mittels der Horizontalförderung 140 in die Vereinzelungsvorrichtung 1 eingeführt wird, zwingt die Justiervorrichtung 41 den Stoß in die vorbestimmte Stellung.

Figur 7 zeigt eine detaillierte Draufsicht auf die in Figur 6 abgebildete Vereinzelungsvorrichtung 1. Die in Figur 7 abgebildete Vereinzelungsvorrichtung unterscheidet sich von der zuvor in Bezug auf Figur 2b beschriebenen im Wesentlichen nur dadurch, dass sie nicht mit einem Stoß belegt ist.

Im Bereich der Abfüllstation 160 ist eine Waage 180 angeordnet, welche zunächst das Tara-Gewicht eines vereinzelten Gefäßes erfassen kann. Mit der Waage 180 kann zusätzlich oder alternativ das Füllgewicht des Gefäßes ermittelt werden. Es ist denkbar, dass die Waage 180 während der Abgabe der Masse durch die Abgabevorrichtung 161 den Befüllvorgangüberwacht und gegebenenfalls die Messwerte der Waage 180 zum Steuern des Befüllvorgangs verwendet werden.

Nach Vollenden des Befüllvorgangs wird das vereinzelte und nunmehr befüllte Gefäß mit der Horizontalförderung 140 weiter in der Transportrichtung T zu einer Verschließstation 190 transportiert. In der Verschließstation 190 wird ein Deckel für den Behälter bereitgestellt. Der Deckel wird auf den Behälter aufgelegt, um die Öffnung 22 zu verschließen.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichen

- 1: Vorrichtung zum Vereinzeln, Vereinzelungsvorrichtung
- 3: Gestell
- 5: Führungsschiene
- 6: Antriebseinheit
- 11: Greifeinheit
- 12: Kontaktfläche
- 13: Backe
- 15: Backe
- 17, 18: Aussparung
- 19: Oberseite
- 20: erstes Gefäß, Henkeleimer
- 21: Boden
- 22: Öffnung
- 23: verjüngender Gefäßabschnitt
- 24: Umfangssegment
- 25: Radialvorsprung
- 26: Bereich
- 27: Henkel
- 28: Spalt
- 29: Zwischenraum
- 31: Halteeinheit
- 33: Stützvorrichtung
- 35: Haltenase
- 41: Justiervorrichtung
- 43: Manipulator
- 44: Schwenkarm
- 45: Mitnehmer
- 71,271: Henkelgelenk
- 72, 272: Henkelgriffabschnitt
- 100: System zum Befüllen
- 120: Magazin
- 140: Horizontalförderung
- 141: Schieber
- 160: Abfüllstation
- 161: Abgabevorrichtung
- 180: Waage
- 190: Verschließstation
- 200: Stoß
- 220: zweites Gefäß
- 221: Boden
- 222: Öffnung
- 223: verjüngender Gefäßabschnitt
- 225: Radialvorsprung
- 227: Henkel
- 230: drittes/weiteres Gefäß

- a: Abstand
- b_{Q}: Querbreite des Bodens
- b_{L}: Längsbreite des Bodens

- A: Belüftung
- L: Längsrichtung
- Q: Querrichtung
- R: Radialrichtung
- S: Stoßrichtung
- T: Transportrichtung
- U: Übergaberichtung
- X: erste Horizontalrichtung
- Y: zweite Horizontalrichtung
- Z: Vertikalrichtung

## Patentansprüche

1. Vorrichtung (1) zum Vereinzeln eines Gefäßes (20) aus einem Stoß (200), insbesondere Stapel, umfassend mehrere in einer Stoß- bzw. Stapelrichtung (S) ineinander steckende Gefäße (20, 220), insbesondere Henkeleimer, die einen Boden (21, 221), einem insbesondere kragenförmigen Radialvorsprung (25, 225) und einem sich vom Radialvorsprung (25, 225) zum Boden (20, 220) verjüngenden Gefäßabschnitt (23, 223) aufweisen, umfassend:
eine Greifeinheit (11) zum Erfassen des Gefäßabschnitts (23, 223) eines ersten Gefäßes (20), und
eine Halteeinheit (31) zum Fixieren eines zweiten Gefäßes (220), das in dem ersten Gefäß (20) steckt, insbesondere am Radialvorsprung (225) des zweiten Gefäßes (220), wobei
die Halteinheit (31) und die Greifeinheit (11) zum Vereinzeln des ersten Gefäßes (20) relativ zu einander in der Stoß- bzw. Stapelrichtung (S) beweglich sind.

2. Vorrichtung (1) nach Anspruch 1, wobei die Greifeinheit (11) auf die Gefäße (20, 220) abgestimmt ist und einen passiven Zustand zum Freigeben der Gefäße (20, 220) und einen aktiven Zustand aufweist, wobei die Greifeinheit (11) dazu ausgelegt und eingerichtet ist, das erste Gefäß (20) in dem aktiven Zustand, vorzugsweise umfangsabschnittsweise, mit einem radialen Anpressdruck zu beaufschlagen.

3. Vorrichtung (1) nach Anspruch 2, wobei die Greifeinheit (11) dazu ausgelegt und eingerichtet ist, das erste Gefäß (20) in dem aktiven Zustand durch den Anpressdruck, insbesondere elastisch und/oder reversibel, zu deformieren, vorzugsweise unter Ausbildung eines Spalts (28) zwischen erstem und zweitem Gefäß (20, 220) zum Belüften eines durch das erste und das zweite Gefäß (20, 220) gebildeten Zwischenraums (29).

4. Vorrichtung (1) nach Anspruch 2 oder 3, wobei die Greifeinheit wenigstens zwei quer zur Stoßrichtung gegenüberliegende Backen (13, 15) zum Erfassen des ersten Gefäßes (20), insbesondere an einem Umfangssegment (24) des ersten Gefäßes (20), aufweist, wobei vorzugsweise die Greifeinheit (11) derart auf die Gefäße (20, 220) abgestimmt ist, dass die Backen (13, 15), insbesondere im aktiven Zustand, einen Mindestabstand größer als eine Querbreite (b) des Bodens (21, 221) nicht unterschreiten, wobei insbesondere wenigstens eine Backe (13, 15), wenigstens eine Aussparung (17, 18) zum Aufnehmen eines Henkels (27, 227), insbesondere des ersten Gefäßes (20), aufweist; und/oder
wobei die Greifeinheit (11) dazu ausgelegt und eingerichtet ist, das erste Gefäß (20) in einem Abstand (a), insbesondere von wenigstens 2 cm, vorzugsweise wenigstens 4 cm, von seinem Boden (21) zu erfassen; und/oder
wobei der Gefäßabschnitt (24) ein vorsprungsnahes Drittel, ein mittleres Drittel und ein bodennahes Drittel aufweist, wobei die Greifeinheit (11) dazu ausgelegt ist, das erste Gefäß (20) am bodennahen Drittel zu ergreifen.

5. Vorrichtung (1) nach einem der Ansprüche 1 bis 4, wobei die Greifeinheit (11), insbesondere in dem aktiven Zustand, in der Stoßrichtung (S) zwischen einer Übernahmestellung nahe der Halteeinheit (31) und einer Abstreifstellung entfernt von der Halteeinheit (31), vorzugsweise translatorisch, beweglich ist, wobei insbesondere die Halteeinheit (31) in Bezug auf die Stoßrichtung (S) ortsfest ist und/oder wobei die Vorrichtung (1) den Stoß (200) mit in Vertikalrichtung (Z) ausgerichteter Stoßrichtung (S) trägt, wobei das erste Gefäß (20) zuunterst angeordnet ist.

6. Vorrichtung (1) nach einem der vorstehenden Ansprüche, wobei die Halteeinheit (31) eine zum Radialvorsprung (225) und/oder einem an den Radialvorsprung (225) angrenzenden Bereich (226) des Gefäßabschnitts (223) des zweiten Gefäßes (220) formkorrespondierende Stützvorrichtung (33) umfasst, wobei vorzugsweise die Stützvorrichtung (33) wenigstens zwei in der Radialrichtung (R) gegenüberliegende Haltenasen (35) zum Inkontaktbringen mit dem zweiten Gefäß (220) umfasst, wobei wenigstens eine der Haltenasen (35) quer zur Stoßrichtung (S), insbesondere in der Radialrichtung (R), zwischen einer Freigabestellung und einer Haltestellung, vorzugsweise translatorisch, beweglich ist.

7. Vorrichtung (1) nach einem der vorstehenden Ansprüche, ferner umfassend eine Justiervorrichtung (41), die dazu ausgelegt und eingerichtet ist, einen Stoß (200) aus Gefäßen (20, 220) mit einen jeweiligen Henkel (27, 227) in einer vorbestimmten Henkellage an die Greifeinheit (11) und/oder die Halteeinheit (31) bereitzustellen; und/oder einen Manipulator (43), wie einen Schwenkarm (44) und/oder Mitnehmer (45), zum Entfernen, insbesondere Wegschwenken und/oder Anheben, der Henkel (227) des zweiten und gegebenenfalls weiterer Gefäße (220) in Relation zu dem ersten Gefäß (20).

8. System (100) zum Befüllen von Gefäßen (20, 220), insbesondere Henkeleimern, die einen Boden (21, 221), einen insbesondere kragenförmigen Radialvorsprung (25, 225) und einen sich vom Radialvorsprung (25, 225) zum Boden (21, 221) verjüngenden Gefäßabschnitt (23, 223) aufweisen, mit einer flüssigen, pastösen, riesel- oder schüttfähigen Masse, vorzugsweise einem Baustoff, wie eine Farbe, umfassend:
eine Vorrichtung (1) zum Vereinzeln eines Gefäßes (20) nach einem der vorstehenden Ansprüche und eine Abfüllstation (160) und eine Abgabevorrichtung (161) zum Befüllen des Gefäßes (20) mit einem vorbestimmten Füllvolumen der Masse.

9. System nach Anspruch 8, ferner umfassend wenigstens eine Horizontalförderung, insbesondere einem Rollentisch, zum Transportieren wenigstens eines Stoßes zu der Vereinzelungsvorrichtung (1) und/oder zum Transportieren wenigstens eines Gefäßes von der Vereinzelungsvorrichtung (1) zu der Abfüllstation, wobei insbesondere die Vorrichtung (1) gemäß Anspruch 5 ausgebildet ist, wobei die Greifeinheit, insbesondere in dem aktiven Zustand, in der Stoßrichtung zwischen einer Annahmestellung zum Erfassen eines von der Horizontalförderung (140) getragenen ersten Gefäßes (20) zu der Übernahmestellung, insbesondere zum Anheben des Stoßes (200), vorzugsweise translatorisch, beweglich ist, wobei vorzugsweise die die Greifeinheit (11) dazu ausgelegt ist, in der Abstreifstellung von dem passiven Zustand in den aktiven Zustand zu wechseln, um den Stoß (200) zu ergreifen; und/oder, wobei vorzugsweise die Greifeinheit (11) dazu ausgelegt ist, in der Abstreifstellung von dem aktiven Zustand in den passiven Zustand zu wechseln, um das erste Gefäß (20) an die Horizontalförderung (140) zu übergeben.

10. Verfahren zum Vereinzeln eines Gefäßes (20) aus einem Stoß (200) umfassend mehrere in einer Stoßrichtung (S) in einander steckende Gefäße (20, 220), insbesondere Henkeleimer, die einen Boden (21, 221), einen insbesondere kragenförmigen Radialvorsprung (25, 225) und einen sich vom Radialvorsprung (25, 225) zum Boden (21, 221) verjüngenden Gefäßabschnitt (23, 223) aufweisen, wobei ein erstes Gefäß (20) in dessen Gefäßabschnitt (23) von einer Greifeinheit (11) erfasst wird,
wobei eine Halteeinheit (31) ein in dem ersten Gefäß (20) steckendes zweites Gefäß (220), insbesondere an dessen Radialvorsprung (225), fixiert, und wobei die Greifeinheit (11) mit dem ersten Gefäß (20) von der Halteeinheit (31) in der Stoßrichtung (S) entfernt wird.

11. Verfahren nach Anspruch 10, wobei die Greifeinheit (11) das erste Gefäß (20) an gegenüberliegenden Bereichen, insbesondere Umfangssegmenten des Gefäßabschnitts (23), insbesondere mittels Backen (13, 15), vorzugsweise umfangsabschnittsweise, mit einem radialen Anpressdruck beaufschlagen, um das erste Gefäß (20) zu erfassen.

12. Verfahren nach Anspruch 11, wobei das erste Gefäß (20) durch den Anpressdruck, insbesondere elastisch und/oder reversibel, deformiert wird, vorzugsweise unter Ausbildung eines Spalts (28) zwischen erstem und zweitem Gefäß (20, 220) zum Belüften eines durch das erste und das zweite Gefäß (20, 220) gebildeten Zwischenraums (29).

13. Verfahren nach einem der Ansprüche 10 bis 12, wobei die Greifeinheit (11) das erste Gefäß (20) in einem Abstand (a), insbesondere von wenigstens 2 cm, vorzugsweise wenigstens 4 cm, vom Boden (21) erfasst und/oder die Greifeinheit (11) das erste Gefäß (21) in einem bodennahen Drittel oder einer bodennahen Hälfte des Gefäßabschnitts (23) ergreift.

14. Verfahren nach einem der Ansprüche 10 bis 13, wobei das erfasste, erste Gefäß (20) mittels der Greifeinheit (11) von dem Stoß (200) abgezogen wird, während das zweite und gegebenenfalls weitere Gefäße (220) durch die Halteeinheit (31) ortsfest gehalten werden.

15. Verfahren nach einem der Ansprüche 10 bis 14, wobei Gefäße (20, 220) mit einen jeweiligen Henkel (27, 227) bereitgestellt werden und wobei die Henkel (227) des zweiten und gegebenenfalls weiterer Gefäße (220) vor dem Vereinzeln des ersten Gefäßes (20) von dem ersten Gefäß (20) entfernt, insbesondere weggeschwenkt und/oder angehoben, werden, wobei vorzugsweise der Stoß (200) verschachtelter Gefäße (20, 220) mit einer vorbestimmten Henkellage an die Greifeinheit (11) und/oder die Halteeinheit (31) bereitgestellt wird.
